**Europäisches Patentamt**

**European Patent Office**

**Office européen des brevets**

(19)

(11) Veröffentlichungsnummer : **0 394 219 B1**

(12)

# EUROPÄISCHE PATENTSCHRIFT

(45) Veröffentlichungstag der Patentschrift :
**15.01.92 Patentblatt 92/03**

(51) Int. Cl.[5] : **G01D 5/26**, G01H 9/00,
G11B 7/135, G01L 1/24

(21) Anmeldenummer : **87903319.9**

(22) Anmeldetag : **04.06.87**

(86) Internationale Anmeldenummer :
**PCT/EP87/00289**

(87) Internationale Veröffentlichungsnummer :
**WO 88/09917 15.12.88 Gazette 88/27**

(54) **OPTISCHES MODULATIONS- UND MESS-VERFAHREN.**

(43) Veröffentlichungstag der Anmeldung :
**31.10.90 Patentblatt 90/44**

(45) Bekanntmachung des Hinweises auf die
Patenterteilung :
**15.01.92 Patentblatt 92/03**

(84) Benannte Vertragsstaaten :
**AT BE CH DE FR GB IT LI LU NL SE**

(56) Entgegenhaltungen :
**US-A- 4 360 247
US-A- 4 471 474
US-A- 4 545 253
Patent Abstracts of Japan, vol. 9, No. 62,
(P-342) (1785) 19 March 1985, & JP, A,
59-197829**

(73) Patentinhaber : **LUKOSZ, Walter
Burstwiesenstrasse 55
CH-8606 Greifensee (CH)**

(72) Erfinder : **LUKOSZ, Walter
Burstwiesenstrasse 55
CH-8606 Greifensee (CH)**

(74) Vertreter : **Lusuardi, Werther Giovanni, Dr.
Dr. Lusuardi AG, Kreuzbühlstrasse 8
CH-8008 Zürich (CH)**

## Beschreibung

Die vorliegende Erfindung betrifft ein optisches mikro-mechanisches Verfahren zur Phasenänderung geführter Wellen und Mess-Verfahren für sehr kleine mechanische Verschiebungen, eine Vorrichtung zur Durchführung des Verfahrens und Anwendungen dieses Verfahrens zur Phasen- und/oder Intensitäts-Modulation, und/oder zum Schalten, und/oder zur Ablenkung, und/oder Fokussierung optischer Wellen, und/oder zur Aenderung der Resonanzfrequenzen von Frequenzfiltern für geführte optische Wellen, und/oder zur Aenderung der Emissionsfrequenzen integriert-optischer Laser und zur Messung von mechanischen Kräften, oder pneumatischen oder hydrostatischen Drücken, einschliesslich der Drücke von Schall- und Ultraschall-Wellen, und/oder von Beschleunigungen, und/ oder von elektrischen Spannungen oder Strömen, und/oder von Temperatur-Aenderungen.

Optische Wellenleiter haben einerseits die Form von Faser-Wellenleitern. Andererseits sind sie die Grundelemente der integrierten Optik, wobei sie als planare Wellenleiter oder als Streifenwellenleiter vorliegen, welche auf einem Substrat oder dicht unterhalb von dessen Oberfläche angebracht sind. Die Wellenleiter haben eine höhere Brechzahl als das Substrat oder das Superstrat mit dem sie bedeckt sind. Daher ist die Führung optischer Wellen im Wellenleiter durch Totalreflexion möglich. Weitere integriert-optische Elemente sind insbesondere y-Verzweigungen, Strahlteiler und Linsen für geführte Wellen, ferner als Ein- oder Aus-Koppler oder als Bragg-Reflektoren dienende Gitter. Als Gitter werden insbesondere Reliefgitter verwendet, die an der Grenzfläche zwischen Substrat und Wellenleiter oder an der Oberfläche des Wellenleiters bzw. falls dieser mit einem Superstrat bedeckt ist, an der Grenzfläche zwischen Wellenleiter und Superstrat angebracht sind. Mit solchen integriert-optischen Elementen werden integriert-optische Schaltungen aufgebaut.

Nach dem gegenwärtigen Stand der Technik sind insbesondere folgende integriert-optische Schaltungen bekannt, die in der vorliegenden Erfindung mitverwendet werden: Richtkoppler, welche aus zwei Streifenwellenleitern bestehen die in einem mehrere mm langen Koppelbereich einen sehr kleinen Abstand voneinander haben, und welche z.B. zum Schalten von optischen Wellen zwischen zwei verschiedenen Ausgängen und als Intensitäts-Modulatoren benutzt werden; X-Schalter, bei denen zwei Streifenwellenleiter sich unter einem sehr kleinen Winkel überkreuzen und welche zum Schalten von optischen Wellen zwischen den beiden Ausgangs-Wellenleitern benutzt werden;

Zweistrahl-Interferometer, insbesondere Mach-Zehnder- und Michelson-Interferometer, die z.B. zur Intensitäts-Modulation optischer Wellen benutzt werden;

Resonatoren, insbesondere Fabry-Perot-, Ring- und "DFB"-(d.h. distributed feedback)-Resonatoren, welche z.B. als Frequenzfilter und als Laser-Resonatoren verwendet werden;

Bragg-Reflektoren, die z. B. als frequenz-selektive Reflektoren und Deflektoren und zur Moden-Konversion zwischen Moden verschiedener Polarisation und/oder Modenzahl dienen;

Gitter-Einkoppler, die zum Einkoppeln einer optischen Welle, in einen Wellenleiter dienen;

Gitter-Auskoppler, die zum Auskoppeln einer geführten Welle aus dem Wellenleiter dienen, wobei die ausgekoppelte Welle von einem Auskoppler mit gekrümmten Gitterlinien und mit nicht konstanter Gitter-Periode auch fokussiert werden kann.

Mit solchen integriert-optischen Schaltungen werden aktive integriert-optische Bauelemente, welche zeitabhängige Funktionen (Operationen) ausführen können, insbesondere Phasen- und Intensitäts-Modulation, Ein- und Aus-schalten oder Schalten zwischen verschiedenen Ausgängen, und Ablenkung geführter optischer Wellen, Abstimmung der Resonanzfrequenzen von Frequenz-Filtern oder der Frequenz für welche das Bragg'sche Reflexionsgesetz an einem Gitter erfüllt ist, und Abstimmung der Resonanzfrequenzen von Resonatoren, nach dem Stand der Technik durch Ausnutzung des elektro-optischen oder seltener des photo-elastischen oder des magneto-optischen Effekts im Wellenleiter-Material selbst oder in den an diesen angrenzenden Bereichen von Substrat oder Superstrat realisiert. Der lineare elektro-optische Effekt tritt nur in Kristallen nicht aber in isotropen Materialien auf. Dieses physikalische Gesetz wirkt sich beim gegenwärtigen Stand der Technik dadurch nachteilig aus, dass die Material-Auswahl für aktive integriert-optische Bauelemente stark eingeschränkt wird. Gegenwärtig finden vorwiegend $LiNbO_3$-Kristalle und III-V Halbleiter-Materialien Verwendung. Da für die Glasfaser Kommunikationstechnik aber billige integriert-optische Schaltungen in grossen Stückzahlen benötigt werden, wäre der Einsatz auch anderer und billigerer Materialien sehr erwünscht. Die Wirkungsweise dieser bekannten Bauelemente beruht auf einer Aenderung der Brechzahl in einem der verwendeten Materialien und die dadurch bewirkte Aenderung der effektiven Brechzahl N der im Wellenleiter geführten Welle. Mit einer Aenderung $\Delta N$ der effektiven Brechzahl in einem Wellenleiter der Länge L ist eine Phasenänderung $\Delta\Phi=(2\pi/\lambda)L\Delta N$ der geführten Welle verknüpft, wobei $\lambda$ die Wellenlänge ist. Eine offensichtliche weitere Möglichkeit eine Phasenänderung $\Delta\Phi$ einer geführten Welle zu erzeugen, ist die Länge L des von der geführten Welle zurückgelegten Weges, d.h. die Länge L des Wellenleiters, um $\Delta L$ zu ändern; dann ist $\Delta\Phi=(2\pi/\lambda)N\Delta L$. Von dieser Möglichkeit wird besonders bei Faserwellenleitern, welche leicht dehnbar sind, oft Gebrauch gemacht. Eine Phasenänderung bzw. -modulation der geführten Welle kann nach dem Stand der Technik z.B. in einem integriert-optischen Interferometer in eine Intensitätsänderung bzw. -modulation umgesetzt werden.

Nach dem gegenwärtigen Stand der Technik sind weitere Verfahren zur Intensitätsmodulation geführter Wellen bekannt, welche ohne elektro-optische Materialien auskommen, vergl. zum Beispiel die Patente US-A-4 471 474 und US-A 4 545 253. Bei diesen Verfahren ist ein bewegliches Element in sehr kleinem Abstand d von einem Wellenleiter-Abschnitt angeordnet; das Element ist dabei entweder ein absorbierendes Medium in welchem Licht der im Wellenleiter-Abschnitt geführten Welle absorbiert wird, oder ein Medium wie ein zweiter Wellenleiter in welches Licht der geführten Welle abgestrahlt wird. Die Absorption hängt dabei vom Abstand d ab. Daher wird bei einer Variation des Abstands d eine Intensitätsmodulation der geführten Welle bewirkt. Ist das bewegliche Element ein zweiter Wellenleiter so sind die beiden Wellenleiter über das evaneszente oder quergedämpfte Feld der geführten Welle miteinander gekoppelt. Licht der im ersten Wellenleiter geführten Welle wird aus diesem ausgekoppelt und in den zweiten eingekoppelt, mit anderen Worten, es wird ein Teil der Leistung der geführten Welle aus dem ersten Wellenleiter abgestrahlt und vom zweiten aufgefangen. Bei einer Variation des Abstands d wird die Kopplung variiert und deshalb tritt eine Intensitätsmodulation der geführten Welle auf. Eine Phasenmodulation der geführten Welle wird in den oben genannten Druckschriften im Zusammenhang mit der beschriebenen Kopplung nicht offenbart.

Der Erfindung liegt die Aufgabe zugrunde ein optisches mikro-mechanisches Verfahren zur Aenderung der effektiven Brechzahl und somit zur Phasenänderung geführter Wellen zu schaffen, bei welchem die Leistung der geführten Welle nicht abgeschwächt wird und somit auch keine Intensitätsmodulation auftritt, und welches nicht von elektro-optischen, magneto-optischen oder photo-elastischen Material-eigenschaften Gebrauch macht, sondern eine mikromechanische Bewegung oder Deformation ausnutzt, und Vorrichtungen zur Durchführung dieses Verfahrens zu schaffen, zu deren fabrikatorischer Herstellung eine wesentlich grössere Auswahl von Materialien zur Verfügung steht, da diese nicht die oben erwähnten Materialeigenschaften aufzuweisen brauchen.

Eine zur obigen reziproke Aufgabe besteht darin, sehr kleine mechanische Verschiebungen mit einer Auflösung im nm (Nanometer) und Sub-nm Bereich zu messen, und somit auch die diese Verschiebungen bewirkenden Kräfte zu bestimmen, ins-besondere mechanische Kräfte oder pneumatische und hydrostatische Drücke, oder Beschleunigungen, oder Schall- und Ultraschall-Wellen, oder elektrostatisch, elektromagnetisch oder piezoelektrisch erzeugte Kräfte, und somit auch die diese verursachenden elektrischen Ströme, Spannungen oder Temperaturänderungen.

Die Erfindung löst die Aufgaben durch ein Verfahren gemäss den Merkmalen des Anspruches 1 und einer Vorrichtung gemäss den Merkmalen des Anspruches 19.

Der Grundgedanke des erfindungsgemässen Verfahrens besteht darin, die effektive Brechzahl N der in einem Wellenleiter geführten Welle und somit ihre Phase dadurch zu verändern, dass der Abstand zwischen dem Wellenleiter und einem diesem gegenüber angebrachten phasenschiebenden Element variiert wird, beispielsweise durch Einwirken einer Kraft oder durch thermische bewirkte Ausdehnung oder Deformation. Das phasenschiebende Element dessen Aufbau weiter unten im Detail beschrieben wird, muss in einem so kleinen Abstand d vom Wellenleiter angebracht werden, dass die im Wellenleiter geführte Welle über ihr mit zunehmender Entfernung vom Wellenleiter exponentiell abfallendes quergedämpftes Feld mit dem phasenschiebenden Element in Wechselwirkung tritt; vorzugsweise muss der Abstand d weniger als eine bis maximal vier Eindringtiefen $\Delta z$ betragen, wobei $\Delta z$ weiter unten definiert wird. Da die Phasengeschwindigkeit $v_p$ einer geführten Welle über die Beziehung $v_p = c/N$ - in welcher c die Lichtgeschwindigkeit im Vakuum ist - mit der effektiven Brechzahl N zusammenhängt, bewirkt eine Variation des Abstandes d eine Aenderung der Phasengeschwindigkeit $v_p$. Die Aenderungen der effektiven Brechzahl N treten nur in jenem Abschnitt des Wellenleiters auf dem gegenüber das phasenschiebende Element angebracht ist.

Die Wirkung des phasenschiebenden Elementes auf die effektive Brechzahl N hat folgenden Grund: Das elektromagnetische Feld der im Wellenleiter geführten Welle reicht als sogenannte quergedämpfte oder evaneszente Welle mit einer mit zunehmender Entfernung vom Wellenleiter exponentiell abfallenden Feldstärke in den Zwischenraum zwischen Wellenleiter und phasenschiebenden Element hinaus. Der Zwischenraum ist mit einem bei der benutzten Lichtwellenlänge $\lambda$ nicht licht-absorbierenden Medium gefüllt, dessen Brechzahl n kleiner als die effektive Brechzahl N ist (n<N). Die Eindringtiefe $\Delta z$ des quergedämpften Feldes in den Zwischenraum ist $\Delta z = (\lambda/2\pi)(N^2 - n^2)^{-1/2}$. Ist z.B. n=1 und $N \geq 1.5$ so ist $\Delta z \leq 0{,}14\,\lambda$, d.h. wesentlich kleiner als die Lichtwellenlänge $\lambda$. Nur wenn die Brechzahl-Differenz N-n sehr klein wird kann $\Delta z$ grösser als $\lambda$ werden; z.B. ist für $N \geq 1{,}5$ und $N-n \geq 0{,}005$, die Eindringtiefe $\Delta z \leq 1{,}3\,\lambda$. Befindet sich das phasenschiebende Element in einem Abstand d vom Wellenleiter der kleiner ist als etwa ein bis vier Eindringtiefen $\Delta z$ ist, so dringt das quergedämpfte Feld in das phasenschiebende Element oder mindestens in dessen dem Wellenleiter zugewandte oberflächennahe Schichten ein. Diese Wechselwirkung des quergedämpften Feldes mit dem phasenschiebenden Element bewirkt, dass die effektive brechzahl N der im Wellenleiter geführten Welle vom Abstand d abhängig wird.

Ueberraschenderweise hat sich gezeigt, dass die Aenderung der effektiven Brechzahl N bei einer Aenderung von d sehr gross ist, sodass Abstandsänderungen $\Delta$d von einigen nm (Nanometern) oder sogar von Bruchteilen eines nm für integriert-optische Modulationsverfahren ausreichend grosse effektive Brechzahländerungen bewirken, z. B. $\Delta$N=1.10$^{-3}$.

Das phasenschiebende Element bzw. dessen oberste dem Wellenleiter zugewandte Schicht oder Schichten bestehen aus bei der verwendeten Wellenlänge $\lambda$ absorptionsfreien oder absorptionsarmen dielektrischen Materialien beispielsweise SiO$_2$, Glas oder Kunststoffe, deren Brechzahlen $n_E$ kleiner als die effektive Brechzahl N der geführten Welle sind. Aufgrund der Absorptions-Freiheit und der bedingung $n_E$<N wird die im Wellenleiter-Abschnitt gegenüber dem phasenschiebenden Element geführte Welle weder durch Absorption noch durch Abstrahlung in das phasenschiebende Element gedämpft. Dass keine Abstrahlung auftreten kann folgt mit $n_E$<N aus dem Brechungsgesetz. Die Leistung der geführten Welle bleibt auch bei Aenderungen des Abstandes a unverändert. Das phasenschiebende Element bewirkt also nur eine Aenderung der effektiven Brechzahl N und damit eine Phasenänderung der geführten Welle, aber keine Abschwächung der geführten Welle durch Absorption oder Abstrahlung.

Die Phasenänderung $\Delta\Phi$ welche eine geführte Welle in einem Wellenleiter-Abschnitt gegenüber einem phasenschiebenden Element der Länge L erfährt ist $\Delta\Phi=(2\pi/\lambda)L\Delta N$. Bei kleinen Abstandsänderungen $\Delta$d ist $\Delta$N zu $\Delta$d proportional, d.h. es ist $\Delta N=S\Delta d$, wobei $S=\Delta N/\Delta d$ eine Konstante ist. Bei einer Wellenlänge von $\lambda$=0,8 $\mu$m wird eine Phasenschiebung von $\Delta\Phi=\pi$ beispielsweise erreicht, mit $\Delta$N=1.10$^{-3}$ wenn L=0,4 mm ist, und mit $\Delta$N=2.10$^{-4}$ wenn L=2 mm ist. Hat die Empfindlichkeits-Konstante den Wert S=1.10$^{-3}$ (nm$^{-1}$), so wird $\Delta\Phi=\pi$ mit Abstandsänderungen von $\Delta$d=1 nm bzw. von $\Delta$d=2 Å erreicht.

Das erfindungsgemässe Verfahren kann in an sich bekannten integriert-optischen Schaltungen wie Interferometern zur Intensitäts-Modulation optischer Wellen, in Richt-Kopplern, Mach-Zehnder-Interferometern und X-Schaltern zum Schalten geführter Wellen zwischen verschiedenen Ausgangs-Wellenleitern, in Resonatoren und Bragg-Reflektoren zur Aenderung der Resonanz- und Durchlass-Frequenzen, in Gitter-Einkopplern zur Aenderung des Einkoppelwirkungsgrades, in Gitter-Auskopplern zur Aenderung des Auskoppel-Winkels und der Fokussierung der ausgekoppelten Welle, und in planaren Wellenleitern zur Ablenkung und Fokussierung geführter Wellen angewendet werden. Mit dem erfindungsgemässen Verfahrens können alle nach dem Stand der Technik bekannten Operationen zum Modulieren, Schalten und Ablenken optischer Wellen mit den gleichen an sich bekannten integriert-optischen Schaltungen realisiert werden, ohne dass elektro-optische, magneto-optische oder photo-elastische Effekte benutzt werden müssen. Der Grund dafür ist folgender: Die Wirkungsweise der nach dem Stand der Technik bekannten integriert-optischen Schaltungen kann so verstanden werden, dass es nur auf effektive Brechzahländerungen oder Phasenänderungen der in diesen Schaltungen geführten Wellen ankommt, nicht aber darauf, durch welchen physikalischen Effekt diese Brechzahländerungen erzeugt werden. Daher haben diese Schaltungen dieselbe Funktion wenn bei dem erfindungsgemässen Verfahren die für ihren Betrieb notwendigen effektiven Brechzahländerungen nicht durch den elektro-optischen Effekt sondern durch die Aenderung des Abstands d zwischen einem oder mehreren phasenschiebenden Elementen und den diesen gegenüberliegenden Wellenleiter-Abschnitten erzeugt werden.

Der zur Erzeugung der effektiven Brechzahl-Aenderung $\Delta$N und Phasenänderung $\Delta\Phi$ ausgenutzte Effekt ist eine mikro-mechanische Relativ-Bewegung zwischen Wellenleiter und phasenschiebendem Element, wobei die Verschiebungen sehr klein sind und im nm oder sub-nm Bereich liegen können. Um bei dem erfindungsgemässen Verfahren grosse Empfindlichkeiten $S=\Delta N/\Delta d$ zu erreichen, d.h. mit kleinen Abstandsänderungen $\Delta$d arbeiten zu können, muss der Abstand d zwischen phasenschiebendem Element und Wellenleiter kleiner als vier Eindringtiefen $\Delta$z sein; sehr kleine Abstände d im Bereich von wenigen nm bis etwa einer Eindringtiefe $\Delta$z ergeben sehr grosse Empfindlichkeiten. Der Zwischenraum zwischen phasenschiebendem Element und dem Wellenleiter muss mit einem bei der benutzten Wellenlänge $\lambda$ nicht oder wenig absorbierenden Medium mit einer mittleren Brechzahl n<N gefüllt sein, vorzugsweise mit Luft oder einem anderen Gas, oder mit einem komprimierbaren oder deformierbaren aus dem Zwischenraum seitlich herausschiebbaren Material bestehen, oder aber evakuiert sein.

Bei dem erfindungsgemässen Verfahren werden <u>einerseits</u> durch bekannte Kräfte oder durch bekannte Temperaturänderungen über thermisch bewirkte Ausdehnung oder Deformation bekannte Abstandsänderungen $\Delta$d und damit gewünschte Phasenänderungen $\Delta\Phi$ einer geführten optischen Welle erzeugt, wobei die Phasenänderung $\Delta\Phi$ direkt als Phasen-Modulation ausgenutzt wird, oder in einer integriertoptischen Schaltung eine Intensitäts-Modulation, und/oder Ablenkung, und/oder Ein-/Aus-Schalten oder Schalten zwischen verschiedenen Ausgängen, und/oder Frequenz-Aenderung von optischen Wellen bewirkt, oder <u>andererseits</u> werden - in reziproker Weise - aus den Phasen-, Intensitäts- oder Frequenz-Aenderungen einer optischen Welle die unbekannten zu messenden Abstandsänderungen $\Delta$d bestimmt, d.h. sehr kleine mechanische Verschiebungen mit einer Auflösung im nm bis Sub-nm Bereich, und daraus die die Abstandsänderung bewirkenden Kräfte, insbesondere mechanische Kräfte oder pneumatische oder hydrostatische Drücke, einschliesslich der Drücke von Schall- und Ultraschallwellen, oder elektrische Spannungen und Ströme, oder Temperaturänderungen nachgewiesen oder bestimmt.

Die Vorrichtung zur Durchführung des erfindungsgemässen Verfahrens umfasst einen Wellenleiter, oder eine integriert-optische oder faser-optische Schaltung die mindestens einen Wellenleiter enthält, und mindestens ein phasenschiebendes Element, das gegenüber einem Abschnitt eines Wellenleiters in einem Abstand d, der so klein ist dass die im Wellenleiter geführte Welle über ihr quergedämpftes Feld mit dem phasenschiebenden Element in Wechselwirkung tritt, und der vorzugsweise kleiner als vier Eindringtiefen $\Delta z$ ist, aber mindestens so gross wie die erforderliche Abstandsänderung $\Delta d$ ist, so angebracht wird, dass sehr kleine Abstands-Aenderungen $\Delta d$ im Bereich von Bruchteilen von nm bis einige 10 nm oder bis Bruchteilen einer Eindringtiefe $\Delta z$ durch äussere Kräfte bewirkt werden können. Die Kräfte sind insbesondere mechanische Kräfte und pneumatische oder hydrostatische Drücke, die periodischen Druckänderungen in Schall- und Ultraschallwellen, Beschleunigungs-Kräfte, piezoelektrische, elektrostatische, elektromagnetische Kräfte, durch Temperaturänderungen über thermische Ausdehnung oder Deformation oder Verbiegung erzeugte Kräfte, und die durch akustische Oberflächenwellen erzeugten Kräfte.

Bei der fabrikatorischen Herstellung der erfindungsgemässen Vorrichtung können Silizium-Wafer mit aufgewachsenen $SiO_2$-Schichten als Schutzschichten mit niedrigerer Brechzahl als billiges Substrat-Material verwendet werden, auf denen z.B. mit CVD-Verfahren Schichten mit höheren Brechzahlen, vorzugsweise aus $Si_3N_4$, als Wellenleiter erzeugt werden. Als weitere billige Materialien für Substrate können Gläser verwendet werden, in bzw. auf denen die Wellenleiter durch Dotieren mit Ionen beispielsweise Tl- oder Ag-Ionen, oder durch Aufbringen von glasartigen Schichten durch Aufdampfen oder Sputtern, oder mit einem Tauch-Verfahren (Sol-Gel-Prozess) erzeugt werden. Auch Kunststoffe können als Materialien für Substrate, Wellenleiter, Trenn- und Schutzschichten und für phasenschiebende Elemente verwendet werden.

Zur fabrikatorischen Herstellung der erfindungsgemässen Vorrichtung, welche sowohl Wellenleiter und integriert-optischen Schaltungen sowie phasenschiebende Elemente umfasst, in grossen Stückzahlen, eignet sich insbesondere die Silizium-Technologie, welche u.a. Photolithographie, Beschichtungsverfahren und chemische und Trocken-Aetz-Verfahren benutzt. Mit dieser Technologie ist nicht nur die Herstellung von planaren Strukturen möglich, sondern auch von hoch-präzisen, sehr zuverlässigen dreidimensionalen mikromechanischen Bauelementen (siehe z.B. K. Petersen, "Silicon as a Mechanical Material",Proc. IEEE, Vol. 70, No.5, pp 420-457 (1982)). Diese Silizium-Technologie eignet sich somit nicht nur zur Herstellung der Wellenleiter und integriert-optischen Schaltungen sondern insbesondere auch der in sehr kleinem Abstand gegenüber einem Abschnitt eines Wellenleiters angebrachte phasenschiebenden Elementen, welche auch als mikro-mechanische Bauelemente bezeichnet werden können. Diese so hergestellten Bauelemente haben sehr kleine Abmessungen und geringe Massen, sodass die sehr kleinen Abstandsänderungen $\Delta d$ mit kleinen Kräften und/oder sehr schnell im $\mu s$ bis ns Bereich bewirkt werden können.

Die Silizium-Technologie besitzt sehr grosse Vorteile: Es können nicht nur integrierte elektronische Schaltungen, sondern auch lichtempfindliche Detektoren, und passive optische Wellenleiter und integriert-optische Schaltungen, d.h. passive integriert-optische Bauelemente, auf einem Chip integriert werden. Da die herkömmlich verwendeten Materialien keine elektro-optischen Eigenschaften haben, hat die Silizium-Technologie nach dem Stand der Technik aber den Nachteil, dass keine aktiven integriert-optischen Bauelemente wie Modulatoren und Schalter hergestellt werden können. Den letztgenannten Nachteil hilft die vorliegende Erfindung zu überwinden.

In der Faser-Optik werden vorwiegend Glasfasern aber auch Kunststoff-Fasern als zylindrische optische Wellenleiter verwendet. Sie bestehen aus einem Kern mit höherer Brechzahl $n_K$ und einem Mantel mit niedrigerer Brechzahl $n_M < n_K$. Die geführte optische Welle wird im Kern geführt- ähnlich wie in der integrierten Optik im planaren oder Streifenwellenleiter. Das elektromagnetische Feld der geführten Welle reicht in der Form einer quergedämpften Welle mit einer mit zunehmendem Abstand vom Kern exponentiell abfallender Feldstärke in den Mantel hinaus. Die Dicke des Mantels wird um ein Vielfaches grösser als die Eindringtiefe $\Delta z_M$ des quergedämpften Feldes in den Mantel gewählt, um eine unerwünschte Beeinflussung der geführten Welle von aussen zu verhindern. Wird in einem Wellenleiter-Abschnitt der Länge L der Mantel auf einer Seite des Wellenleiters entweder vollständig oder teilweise bis auf eine Dicke von weniger als einigen Eindringtiefen $\Delta z_M$ entfernt, so reicht das quergedämpfte Feld aus dem Kern durch den Rest des Mantels nach aussen hinaus. Die Entfernung des Mantels ist nach dem gegenwärtigen Stand der Technik beispielsweise bei Glas-Fasern durch Polieren realisierbar. Mit Faser-Wellenleitern können nach dem gegenwärtigen Stand der Technik passive faser-optische Schaltungen aufgebaut werden, beispielsweise Mach-Zehnder-, Michelson- und Sagnac-Interferometer, oder Fabry-Perot- und Ring-Resonatoren. Die Wirkungsweise dieser faser-optischen Schaltungen ist zu jener der entsprechenden integriert-optischen Schaltungen analog. Diese faser-optischen Schaltungen werden beispielsweise in der faser-optischen Sensor-Technik angewendet.

Beim erfindungsgemässen Verfahren wird das phasenschiebende Element gegenüber einem Teil der Faser angeordnet an welchem der Mantel ganz oder teilweise entfernt wurde. Dann reicht das quergedämpfte Feld der im Faser-Kern geführten Welle in den Zwischenraum zwischen Faser und phasenschiebenden Element hinaus und tritt mit dem phasenschiebenden Element in Wechselwirkung. Die Wirkungsweise des erfindungsgemässen Verfahrens ist für Faser-Wellenleiter und Streifenwellenleiter prinzipiell dieselbe. Somit können beim erfindungsgemässen Verfahren zur Phasenänderung geführter Wellen und Mess-Verfahren für sehr kleine mechanische Verschiebungen auch Faser-Wellenleiter benutzt werden. Das erfindungsgemässe Verfahren kann deshalb nicht nur in integriert-optischen sondern auch in faser-optischen Schaltungen angewendet werden, beispielsweise kann es in einem Interferometer, wie dem Mach-Zehnder-Interferometer, zur Intensitäts-Modulation und zum Schalten geführter Wellen zwischen verschiedenen Ausgangs-Wellenleitern angewendet werden.

Im folgenden wird die Erfindung anhand von Zeichnungen beispielsweise näher erläutert. Es zeigen:

Fig.1 einen schematischen Längsschnitt durch die Grundelemente der erfindungsgemässen Vorrichtung mit einem phasenschiebenden Element über einem Abschnitt eines Wellenleiters,

Fig.2 einen schematischen Längsschnitt durch eine erfindungsgemässe Vorrichtung mit einem phasenschiebenden Element unter einem Abschnitt eines Wellenleiters,

Fig.3 eine schematische Darstellung in Aufsicht einer erfindungsgemässen Vorrichtung mit einem phasenschiebenden Element in einem Arm eines Mach-Zehnder-Interferometers,

Fig.4 eine schematische Darstellung in Aufsicht einer erfindungsgemässen Vorrichtung mit einem Richtkoppler und einem phasenschiebenden Element im Bereich der Koppelstelle,

Fig.5 eine schematische Darstellung in Aufsicht einer erfindungsgemässen Vorrichtung mit einem phasenschiebenden Element über einem als Bragg-Reflektor dienenden Gitter,

Fig.6 eine schematische Darstellung im Längsschnitt einer erfindungsgemässen Vorrichtung mit einem phasenschiebenden Element im Inneren eines Fabry-Perot-Resonators,

Fig.7 eine schematische Darstellung im Längsschnitt einer erfindungsgemässen Vorrichtung mit einem phasenschiebenden Element über einem als Einkoppler dienenden Gitter,

Fig.8 eine schematische Darstellung im Längsschnitt einer erfindungsgemässen Vorrichtung mit einem phasenschiebenden Element über einem als Auskoppler dienenden Gitter,

Fig.9 eine schematische Darstellung in Aufsicht einer erfindungsgemässen Vorrichtung mit einem phasenschiebenden Element mit einem keilförmigen Spalt über einem planaren Wellenleiter zur Ablenkung einer geführten Welle,

Fig.10 eine schematische perspektivische Darstellung einer erfindungsgemässen Vorrichtung mit einem fokussierenden Auskoppelgitter und einem phasenschiebenden Element zur Ablenkung des ausgekoppelten Strahls,

Fig.11 eine schematische Darstellung in Aufsicht einer erfindungsgemässen Vorrichtung mit einem phasenschiebendem Element gegenüber einem Kreuz-Schalter,

Fig.12 eine schematische Darstellung einer erfindungsgemässen Vorrichtung im Querschnitt mit einem an einer Zunge befestigten phasenschiebenden Element,

Fig.13 eine schematische Darstellung einer erfindungsgemässen Vorrichtung im Längschnitt mit einem phasenschiebenden Element und einem Wellenleiter mit Schutzschicht und einer Aussparung in derselben,

Fig.14 eine schematische Darstellung einer erfindungsgemässen Vorrichtung im Längschnitt mit einem phasenschiebenden Element und einem Wellenleiter mit Schutzschicht und einer Aussparung im Wellenleiter selbst,

Fig.15 eine schematische Darstellung einer erfindungsgemässen Vorrichtung im Längschnitt mit einer Aussparung im Inneren des Wellenleiters,

Fig.16 eine schematische Darstellung einer erfindungsgemässen Vorrichtung mit einem phasenschiebenden Element und einem piezoelektrischen Element zur Abstandsänderung,

Fig.17 eine schematische Darstellung einer erfindungsgemässen Vorrichtung im Querschnitt mit einem phasenschiebenden Element über einem Faser-Wellenleiter,

Fig.18 eine schematische Darstellung einer erfindungsgemässen Vorrichtung in Aufsicht mit einem phasenschiebenden Element in einem Arm eines faser-optischen Mach-Zehnder-Interferometers,

Fig.19 eine schematische Darstellung einer erfindungsgemässen Vorrichtung im Querschnitt mit einem Faser-Wellenleiter und einer Aussparung in demselben.

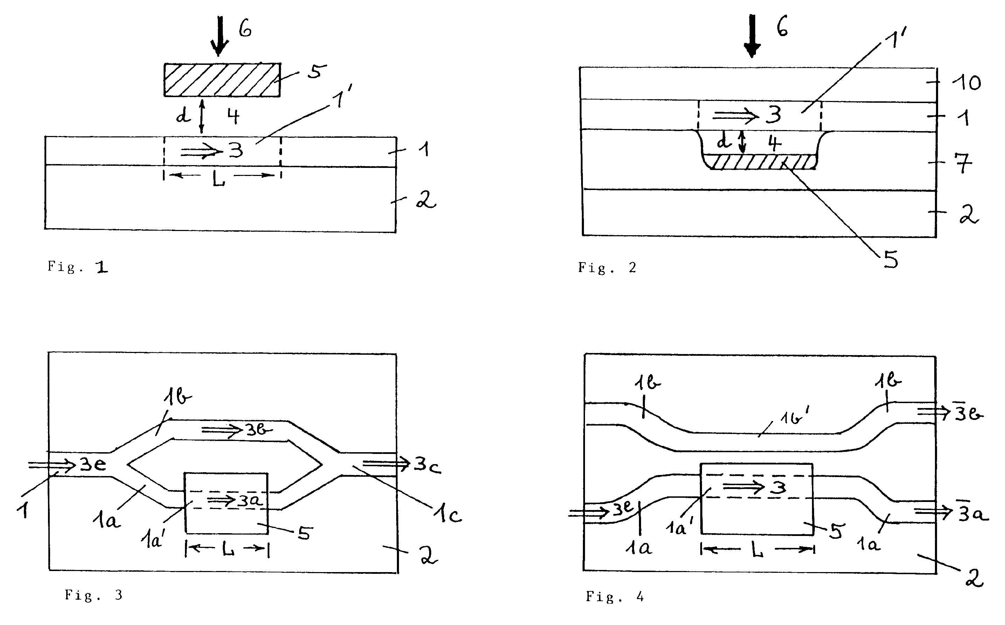

Fig. 1 zeigt die Grundelemente der Erfindung in schematischer Darstellung. Ueber einem Abschnitt 1′ der Länge L eines Wellenleiters 1 auf einem Substrat 2 ist ein phasenschiebendes Element 5 angebracht. Die Befestigung des phasenschiebenden Elements 5 am Wellenleiter 1 oder Substrat 2 ist nicht dargestellt. Der Abstand d zwischen Wellenleiter 1′ und dem phasenschiebenden Element 5 ist variierbar und ändert sich mit der Grösse der Kraft 6. Eine im Abschnitt 1′ des Wellenleiters 1 geführte optische Welle 3 hat eine vom Abstand d abhängige effektive Brechzahl N. Bei einer Aenderung $\Delta$d des Abstandes d ändert sich die effektive Brechzahl N um $\Delta$N. Die Phasendifferenz $\Phi$ welche die geführte Welle 3 bei ihrer Ausbreitung unter dem phasenschiebenden Element 5 im Abschnitt 1' des Wellenleiters der Länge L erfährt ändert sich um $\Delta\Phi=2\pi(L/\lambda)\Delta N$. Eine zeitabhängige Aenderung $\Delta$d(t) des Abstandes d bewirkt eine Phasenmodulation $\Delta\Phi$(t) der geführten Welle 3. Fig. 1 ist somit auch die schematische Darstellung einer als Phasenmodulator wirkenden erfindungsgemässen Vorrichtung. Umgekehrt - in reziproker Weise- kann aus einer gemessenen Phasenänderung $\Delta\Phi$ die Abstandsänderung $\Delta$d und aus dieser die Kraft 6 bestimmt werden.

Fig. 2 zeigt wie Fig. 1 die Grundelemente der Erfindung mit einer anderen Anordnung des phasenschiebenden Elements 5 unterhalb des Abschnitts 1' des Wellenleiters 1. Zwischen Wellenleiter 1 und Substrat 2 kann sich eine Trennschicht 7 befinden. Unterhalb des Wellenleiter-Abschnitts 1' befindet sich in der Trennschicht 7, oder wenn diese nicht vorhanden ist, im Substrat 2 eine Aussparung, die als Zwischenraum 4 den Abstand d zwischen Wellenleiter-Abschnitt 1' und dem phasenschiebenden Element 5 definiert. Das phasenschiebende Element 5 kann auch der direkt an den Zwischenraum 4 angrenzende Bereich der Trennschicht 7 oder des Substrats 2 sein. Der Wellenleiter kann mit einer Schutzschicht 10 bedeckt sein, welche eine kleinere Brechzahl als der Wellenleiter 1 besitzen muss und welche eine unerwünschte Beeinflussung der geführten Welle von aussen verhindert. Beispielsweise kann das Substrat 2 aus Si, der Wellenleiter 1 aus $Si_3N_4$, und die Trennschicht 7, Schutzschicht 10 und das phasenschiebende Element 5 aus $SiO_2$ sein. Der Abstand d zwischen Wellenleiter 1' und dem phasenschiebenden Element 5 ändert sich mit der Grösse der Kraft 6. Figur 2 ist somit die schematische Darstellung einer erfindungsgemässen Vorrichtung welche einerseits wie diejenige gemäss Fig. 1 als Phasen-Modulator und andererseits zur Messung der Abstandsänderung $\Delta$d und somit der Kraft 6 verwendet werden kann.

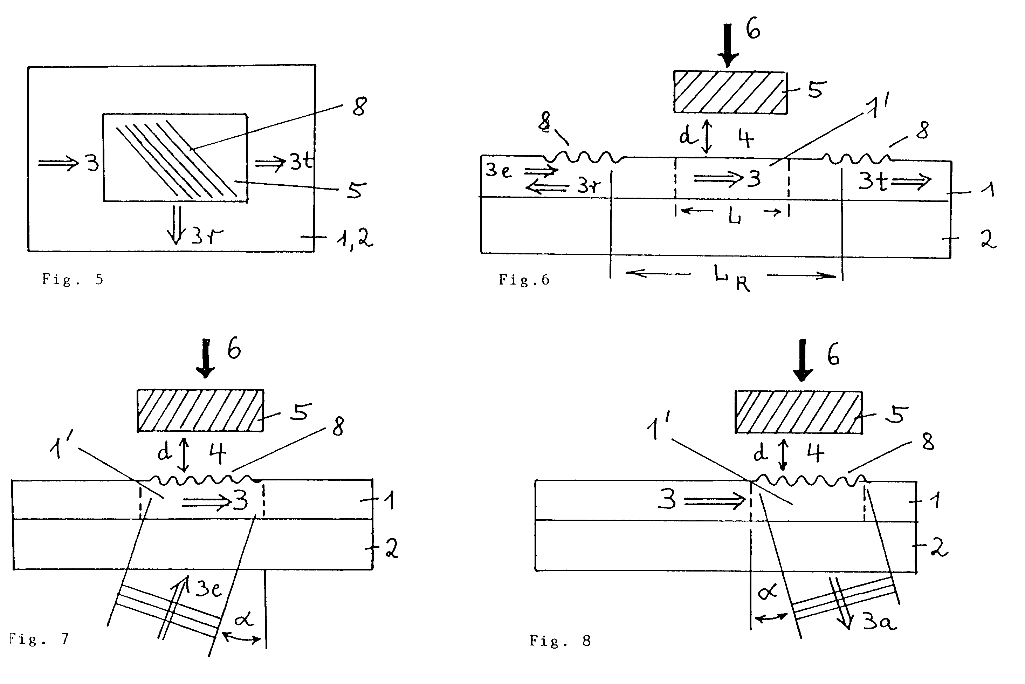

In Fig.3 ist das erfindungsgemässen Verfahren mit einem Mach-Zehnder-Interferometer als integriert-optischer Schaltung schematisch dargestellt. Der auf dem Substrat 2 angebrachte Streifenwellenleiter 1 verzweigt sich in die Streifenwellenleiter 1a und 1b, welche sich wieder zu einem Streifenwellenleiter 1c vereinigen. Ein phasenschiebendes Element 5 ist über einem Abschnitt 1a' der Länge L des Wellenleiters 1a angebracht. Der Abstand d zwischen phasenschiebenden Element 5 und dem Wellenleiter-Abschnitt 1a' ist in der Aufsicht nicht dargestellt. Eine auf das Interferometer einfallende geführte Welle 3e wird in die Teilwellen 3a und 3b aufgeteilt. Die Interferenz dieser beiden Teilwellen mit einer Phasendifferenz $\Phi_a$-$\Phi_b$ ergibt am Ausgang des Interferometers im Wellenleiter 1c die geführte Welle 3c, deren Intensität proportional zu $\cos^2[(\Phi_a-\Phi_b)/2]$ ist. Bei einer Abstandsänderung $\Delta$d ändert sich die effektive Brechzahl der im Wellenleiter-Abschnitt 1a' geführten Welle 3a um $\Delta$N und somit ihre Phase und damit auch die Phasendifferenz $\Phi_a$-$\Phi_b$ um $\Delta\Phi=2\pi(L/\lambda)\Delta N$. Eine Abstandsänderung $\Delta$d(t) bewirkt eine Intensitätsänderung der geführten Welle 3c. Mit einer zeitabhängigen Kraft 6 wird über die resultierende zeitabhängige Abstandsänderung $\Delta$d(t) die Intensitäts-Modulation der optischen Welle 3c bewirkt. Umgekehrt kann aus der gemessenen Intensitätsänderung der Welle 3c die Abstandsänderung $\Delta$d und daraus die Kraft 6 bestimmt werden. Mit einem nicht dargestellten weiteren phasenschiebenden Element im anderen Arm des Interferometers, d.h. über dem Wellenleiter 1b, kann der Teilwelle 3b ebenfalls eine Phasenänderung aufgeprägt werden, beispielsweise mit einer mit der Frequenz $\Omega$ periodischen Abstandsänderung eine Frequenz-Aenderung $\Omega$, um in einem Heterodyn-Verfahren die auf das phasenschiebende Element 5 im Arm 1a des Interferometers einwirkenden Kraft 6 sehr genau bestimmen zu können.

In Fig. 4 ist das erfindungsgemässe Verfahren mit einem Richtkoppler als integriert-optische Schaltung schematisch dargestellt. Die auf einem Substrat 2 angebrachten Streifenwellenleiter 1a und 1b, die in der Koppelregion einen kleinen Abstand von 5 -10 $\mu$m haben, bilden zusammen einen Richtkoppler. Bei geeigneter Länge der Koppelregion, die typischerweise 10 mm beträgt, und des Abstandes der Streifenwellenleiter in der Koppelregion voneinander wird eine in den Wellenleiter 1a eingekoppelte geführte Welle 3e ganz in den Wellenleiter 1b hinüber gekoppelt und tritt am Ausgang des Richtkopplers im Wellenleiter 1b als geführte Welle 3b auf. Durch Aenderungen der effektiven Brechzahlen N in einem oder beiden der Streifenwellenleiter 1a und 1b in der Koppelregion kann die Welle 3e auf den Ausgang 1a geschaltet werden, oder anders ausgedrückt, der Richtkoppler ist eine 2x2-Schalt-Matrix, die vom Kreuz-Zustand in den Parallel-Zustand umgeschaltet werden kann. Die Wirkungsweise des Richtkopplers ist für elektrooptisch bewirkte Aenderungen der effektiven Brechzahlen in der Literatur ausführlich beschrieben worden; siehe z. B. R. G. Hunsperger, "Integrated Optics: Theory and Technology", Chaps. 7 und 8, Springer Verlag, Berlin, 1982 und die dort angegebene Literatur. Beim erfindungsgemässen Verfahren ist ein phasenschiebendes Element 5 der Länge L im Abstand d gegenüber dem Abschnitt 1a' des Wellenleiters 1a in der Koppelregion angebracht. Durch nicht dargestellte Kräfte 6 wird der Abstand d geändert und damit die effektive Brechzahl N der im Wellenleiter-Abschnitt 1a' geführten Welle 3 um $\Delta$N geändert. Damit wird das Koppeln zwischen den Wellenleitern 1a und 1b beeinflusst; mit einer Phasenänderung $\Delta\Phi=2\pi(L/\lambda)\Delta N=\pi\sqrt{3}$ wird der Richtkoppler vom Kreuz-Zustand in den Parallel-Zustand geschaltet.

Nicht dargestellt ist die Möglichkeit, ein zweites phasenschiebendes Element über einem Teil des Wellenleiters 1b′ in der Koppelregion anzubringen, um so die effektiven Brechzahlen in beiden Wellenleitern 1a′ und 1b′ unabhängig voneinander zu ändern. Eine weitere Möglichkeit besteht darin, mit einem in der Koppelregion über beiden Wellenleitern 1a′ und 1b′ angebrachten phasenschiebenden Element 5 durch eine Vergrösserung des Abstandes gegenüber dem einen und eine Verkleinerung des Abstandes gegenüber dem anderen der beiden Wellenleiter eine positive bzw. eine negative effektive Brechzahländerung in den Wellenleitern 1a′ und 1b′ zu erzeugen.

Beim sogenannten "Δß-Umkehr-Richtkoppler" wird nach dem gegenwärtigen Stand der Technik die Koppelregion in zwei Teilstrecken aufgeteilt, in welchen über den elektrooptischen Effekt effektive Brechzahländerungen mit verschiedenem Vorzeichen erzeugt werden (siehe Hunsperger, loc. cit.). Mit dem erfindungsgemässen Verfahren mit zwei phasenschiebenden Elementen 5 über den in zwei Teilstrecken aufgeteilten Wellenleiter-Abschnitten 1a′ und 1b′ wird ohne Benutzung von elektro-optischen Effekten dieselbe Wirkung wie beim Δβ-Umkehr-Richtkoppler-Verfahren erzielt. Beim erfindungsgemässen Verfahren mit dem Richtkoppler als integriert-optischer Schaltung kann mit einer bekannten zeitabhängigen Abstandsänderung $\Delta d(t)$ auch eine gewünschte Intensitäts-Modulation der geführten Wellen $\overline{3a}$ oder $\overline{3b}$ bewirkt werden, oder in dazu reziproker Weise kann aus gemessenen Intensitätsänderungen der Wellen $\overline{3a}$ oder $\overline{3b}$ die unbekannten Abstandsänderungen $\Delta d$ und die diese bewirkenden Kräfte 6 bestimmt werden.

Nicht dargestellt ist die weitere Möglichkeit, mit an sich bekannten Anordnungen von Richtkopplern in einer NxM-Schalt-Matrix mit dem erfindungsgemässen Verfahren mit einem oder mehreren phasenschiebenden Elementen über jedem der Richtkoppler jede auf einem von N Eingangs-Wellenleitern einlaufende optische Welle auf irgendeinen von M Ausgangs-Wellenleitern zu schalten, wobei N, M ganze Zahlen >2 , vorzugsweise ganzzahlige Potenzen von 2, beispielsweise 4, 16, oder 128 sind.

In Fig. 5 ist das erfindungsgemässe Verfahren mit einem Bragg-Reflektor als integriert-optische Schaltung schematisch dargestellt. Als Bragg-Reflektor dient ein am Wellenleiter 1 auf dem Substrat 2 angebrachtes Gitter 8. Eine geführte Welle 3 wird auf den Bragg-Reflektor 8 einfallen gelassen. Durch eine nicht dargestellte Kraft 6 wird der in der Aufsicht ebenfalls nicht dargestellte Abstand d zwischen dem gegenüber dem Gitter 8 angebrachten phasenschiebenden Element 5 und dem Wellenleiter 1 geändert, und dadurch eine Aenderung der effektiven Brechzahl N im Wellenleiter 1 im Bereich des Gitters 8 bewirkt. Damit werden Reflexions- und Transmissions-Vermögen des Bragg-Reflektors 8 und folglich die Amplituden der reflektierten und transmittierten Wellen 3r und 3t geändert. Die Bragg-Bedingung für Reflexion einer monochromatischen geführten Welle 3 mit der Wellenlänge $\lambda$ lautet $2N\Lambda\sin\Theta=l\lambda$, wobei $\Lambda$ die Gitterkonstante, $\Theta$ der Winkel zwischen der Richtung der einfallenden geführten Welle 3 und den Gitterstrichen, und $l=1,2,...$ die Ordnungszahl ist. Ist speziell der Winkel $\Theta=90°$, so wird die geführte Welle 3 dann retro-reflektiert, wenn die Bragg-Bedingung $2N\Lambda=l\Lambda$ erfüllt ist. Die mit einer Abstandsänderung $\Delta d$ erzeugte effektive Brechzahländerung $\Delta N$ im Bereich des Gitters 8 bewirkt eine Aenderung $\Delta\lambda$ der Wellenlänge $\lambda$, bei welcher die Bragg-Reflexion bei konstantem Winkel $\Theta$ auftritt, wobei aus der Bragg-Bedingung $\Delta\lambda/\lambda=\Delta N/N$ folgt. Der Wellenleiter 1 ist als planarer Wellenleiter dargestellt; es können aber auch Streifenwellenleiter für einfallende, transmittierte und reflektierte Wellen verwendet werden. Besitzt der Wellenleiter 1 im Bereich des Gitters 8 optische Verstärkung, d.h. bildet der Wellenleiter 1 mit dem Gitter 8 einen sogenannten "DFB"-Laser (distributed feedback Laser oder Laser mit verteilter Rückkopplung), mit den durch die Bragg-Bedingung $2N\Lambda=l\Lambda$ gegebenen Emissions-Wellenlängen $\Lambda$, so bewirkt eine durch eine Abstandsänderung $\Delta d$ erzeugte effektive Brechzahländerung $\Delta N$ eine Aenderung der Emissions-Wellenlängen um $\Delta\lambda=\lambda(\Delta N/N)$.

Fällt eine im Wellenleiter 1 geführte Welle 3 auf ein Gitter 8 unter bestimmten Einfallswinkeln $\Theta$ ein, so kann Bragg-Reflexion mit Moden-Konversion auftreten, d.h. die reflektierte geführte Welle 3r unterscheidet sich von der einfallenden Welle 3 in Polarisation und/oder Modenzahl. Wird der Abstand d variiert, so wird die Amplitude der Bragg-reflektierten Welle, d.h. der Konversionsgrad, geändert. Nicht dargestellt ist die Möglichkeit, dass der Bragg-Reflektor 8 aus einem Oberflächenreliefgitter besteht, welches an der dem Wellenleiter 1 zugewandten Oberfläche oder den oberflächen-nahen Schichten 13 des phasenschiebenden Elements 5 angebracht ist.

In Fig. 6 wird das erfindungsgemässe Verfahren mit einem Resonator als integriert-optischer Schaltung schematisch dargestellt. Ein phasenschiebendes Element 5 ist im Abstand d gegenüber der Abschnitt 1′ der Länge L des Wellenleiters 1 im Innern eines integriert-optischen Resonators angebracht. Der Resonator ist als Fabry-Perot-Interferometer oder -Resonator der Länge $L_R$ mit Gittern 8 als teildurchlässigen Spiegeln dargestellt. Die Resonanz-Frequenzen des Resonators sind bekanntlich gleichzeitig die Frequenzen für welche das Transmissions-Vermögen des Interferometers maximal ist; sie seien mit $\nu_R$ und die dazugehörigen Resonanz-Wellenlängen mit $\lambda_R$ bezeichnet. Bei einer durch eine Kraft 6 bewirkten Abstandsänderung $\Delta d$ tritt eine effektive Brechzahländerung $\Delta N$ im Wellenleiter-Abschnitt 1′ auf. Dadurch verschieben sich die Resonanz-Wellenlängen $\lambda_R$ um $\Delta\lambda_R$, wobei $2\Delta NL=l\Delta\lambda_R$ und $\Delta\lambda_R/\lambda_R=-\Delta\nu_R/\nu_R=(\Delta N/N)(L/L_R)$ ist. Mit einer auf das phasenschiebende Element 5 einwirkenden Kraft 6 sind die Resonanz-Frequenzen des Resonators abstimmbar oder durchstimmbar. Dies bedeutet, dass

1.) der Resonator für eine auf ihn einfallende geführte Welle 3e ein ab- oder durchstimmbarer Frequenzfilter ist,

2.) für eine monochromatische einfallende geführte Welle 3e eine Intensitäts-Aenderung der tansmittierten Welle 3r und der reflektierten Welle 3t auftritt, und

3.) für einen Laser-Resonator mit Verstärkung die Emissions-Wellenlängen ab- oder durchgestimmt werden.

Nicht dargestellt ist die Möglichkeit, dass der Resonator ein Ringresonator ist.

In Fig. 7 ist das erfindungsgemässe Verfahren mit einem Gitter-Einkoppler als integriert-optischer Schaltung schematisch dargestellt. Es besteht darin, dass der Abstand d zwischen einem mit einem als Einkoppler wirkenden Gitter 8 versehenen Abschnitt 1' eines optischen Wellenleiters 1 auf einem Substrat 2 und dem darüber angebrachten phasenschiebenden Element 5 durch Einwirkung einer Kraft 6 variiert wird, und dass damit der Einkoppel-Wirkungsgrad $\eta$ mit dem eine unter dem Einfallswinkel $\alpha$ auf den Gitterkoppler 8 einfallende optische Welle 3e, vorzugsweise ein Laserstrahl, in den Wellenleiter 1 als geführte Welle 3 eingekoppelt wird, geändert wird. Der Einkoppelwirkungsgrad ist als Verhältnis der Leistungen der eingekoppelten geführten Welle 3 und der einfallenden Welle 3e definiert. Durch eine Variation der Kraft 6 wird die Leistung der eingekoppelten Welle 3 und somit auch diejenige der nicht eingekoppelten Welle geändert. Die Bedingung für optimale Einkopplung, d.h. für maximales $\eta$, lautet: $N=n\sin\alpha + l\lambda/\Lambda$, wobei N die effektive Brechzahl im Bereich des Gitterkopplers, n die Brechzahl der Luft, $\Lambda$ die Gitterkonstante und $l=1,2,...$ die Beugungsordnung ist. Bei einer durch eine Abstandsänderung $\Delta d$ bewirkten effektiven Brechzahländerung $\Delta N$ wird bei konstantem Einfallswinkel $\alpha$ der Einkoppelwirkungsgrad verändert. Ist die einfallende Welle nicht monochromatisch, so wird die Wellenlänge $\lambda$ welche optimal eingekoppelt wird um $\Delta\lambda$ verschoben, wobei aus der Einkoppelbedingung folgt dass $\Delta N=l\Delta\lambda/\Lambda$ ist. Nicht dargestellt ist, dass die einfallende Welle 3e auch durch das phasenschiebende Element 5 - wenn dieses transparent ist - auf den Gitterkoppler 8 einfallen kann. Nicht dargestellt ist auch die Möglichkeit, dass der Gitterkoppler 8 aus einem Oberflächenreliefgitter besteht, welches an der dem Wellenleiter 1 zugewandten Oberfläche oder den oberflächen-nahen Schichten 13 des phasenschiebenden Elements 5 angebracht ist.

In Fig. 8 ist das erfindungsgemässe Verfahren mit einem Gitter-Auskoppler als integriert-optische Schaltung schematisch dargestellt. Es besteht darin, dass der Abstand d zwischen einem mit einem als Auskoppler wirkenden Gitter 8 versehenen Abschnitt 1' eines optischen Wellenleiters 1 auf einem Substrat 2 und dem darüber angebrachten phasenschiebenden Element 5 durch Einwirkung einer Kraft 6 variiert wird, und dass damit der Winkel $\alpha$ unter dem eine geführte Welle 3 vom Gitterkoppler 8 ausgekoppelt wird geändert wird. Die zur Einkoppel-Bedingung analoge Gleichung welche den Auskoppel-Winkel $\alpha$ der ausgekoppelten Welle 3a angibt lautet $N=n\sin\alpha + l\lambda/\Lambda$. Eine effektive Brechzahl-änderung $\Delta N$ im Bereich des Gitters 8 führt zu einer Aenderung $\Delta\alpha$ des Auskoppelwinkels, wobei $\Delta N=n\Delta\alpha\cos\alpha$ ist. Ist die geführte Welle 3 nicht monochromatisch, wie oben angenommen, so wird die Wellenlänge $\lambda$ die unter einem bestimmten Winkel $\alpha$ ausgekoppelt wird um $\Delta\lambda$ verschoben, wobei $\Delta N=l\Delta\lambda/\Lambda$ ist. Nicht dargestellt ist, dass die geführte Welle 3 vom Gitterkoppler 8 auch in Richtung des phasenschiebenden Elements 5 ausgekoppelt und -wenn dieses transparent ist- durch dasselbe abgestrahlt werden kann.

Wird bei dem erfindungsgemässen Verfahren der Abstand d(x) in Ausbreitungsrichtung x der geführten Welle keilförmig ausgebildet, so wird die ausgekoppelte Welle 3a fokussiert oder defokussiert. Eine lineare Aenderung der effektiven Brechzahl im Bereich des Gitterkopplers 8, d.h. $N(x)=N+(dN/dx)x$, wobei dN/dx eine zum Keilwinkel proportionale Konstante ist, wirkt analog wie eine in die ausgekoppelte Welle 3a hineingestellte Zylinderlinse der Brennweite $f=(dN/dx)^{-1}$; zum Beispiel ist f=1 m, wenn N über Länge von 5 mm um $\Delta N=5.10^{-3}$ variiert. Der Gitterkoppler 8 ist als Gitter mit einer konstanten, d.h. nicht ortsabhängigen Gitterkonstante dargestellt. Er kann aber auch eine ortsabhängige Gitterkonstante und damit eine fokussierende Wirkung auf die ausgekoppelte Welle 3a entsprechend einer Linse der Brennweite $f_o$ haben. In diesem Falle wird bei einer Veränderung des Keilwinkels des phasenschiebenden Elements 5 die Lage des Fokus der ausgekoppelten Welle 3a verändert, und zwar um die Distanz $f_o^2/f$, zum Beispiel bei $f_o=10$ mm und f=1 m um $f_o^2/f=0,1$ mm. Nicht dargestellt ist die Möglichkeit, dass der Gitterkoppler 8 aus einem Oberflächenreliefgitter besteht, welches an der dem Wellenleiter 1 zugewandten Oberfläche oder den oberflächen-nahen Schichten 13 des phasenschiebenden Elements 5 angebracht ist.

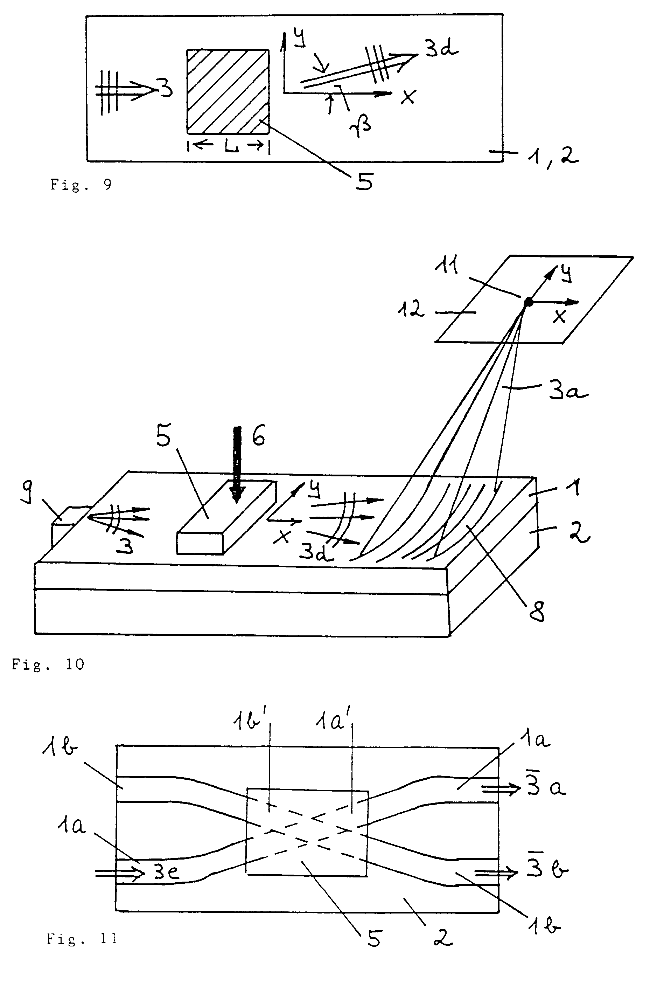

In Fig. 9 ist das erfindungsgemässe Verfahren zur seitlichen Ablenkung einer in einem planaren Wellenleiter 1 geführten Welle schematisch dargestellt. Es besteht darin, dass eine geführte Welle 3 in einem planaren Wellenleiter 1 auf einem Substrat 2 geführt wird, und dass der in der Aufsicht nicht dargestellte Zwischenraum 4 zwischen dem Abschnitt 1' des Wellenleiters 1 und dem diesem gegenüber angebrachten phasenschiebenden Element 5 in y-Richtung senkrecht zur Ausbreitungsrichtung x der geführten Welle 3 keilförmig gestaltet wird und der Keilwinkel durch Einwirkung von nicht dargestellten Kräften 6 variiert wird, wodurch der Winkel $\beta$ um den die abgelenkte geführte Welle 3d (hinter dem phasenschiebenden Element 5) aus der Richtung der einfallenden geführten Welle 3 abgelenkt wird, verändert wird. Der keilförmige Zwischenraum 4, d.h. der von der y Koordinate linear abhängige Abstand d(y), bewirkt, dass auch die effektive Brechzahl N der geführten Welle 3 linear von y abhängt, d.h. dass $N(y)=N+(dN/dy)y$ ist, wobei $dN/dy$ eine zum Keilwinkel proportionale Konstante ist. Damit erfährt die geführte Welle 3 bei ihrer Ausbreitung unter dem phasenschiebenden Element 5 der Länge L die y abhängige Phasenschiebung $\Phi(y)=kNL+kL(dN/dy)y$ , was einer Ablenkung um den Winkel $\beta$ entspricht, wobei $N\sin\beta=L(dN/dy)\approx L\Delta N/D$ ist, wobei $\Delta N$ die Brechzahländerung über die Strahlbreite D ist. Ist beispielsweise $N\approx1,5$, L=10 mm, D=1 bis 0,1 mm und $\Delta N=1.10^{-3}$ wird $\beta\approx0,4°$ bis 4°.

Wird der Abstand d quadratisch von der Koordinate y abhängig, so wird die effektive Brechzahl der im Wellenleiter 1′ geführten Welle 3 in folgender Form von y abhängig: $N(y)=N+\frac{1}{2}(d^2N/dy^2)y^2$, wobei $d^2N/dy^2$ eine Konstante ist. Die geführte Welle 3 erfährt dann durch ihre Ausbreitung unter dem phasenschiebenden Element 5 der Länge L eine y-abhängige Phasenschiebung $\Phi(y)=kLN(y)$, was der Wirkung einer Linse für die geführte Welle 3d mit der Brennweite f entspricht, wobei $1/f=N^1L(d^2N/dy^2)\approx4(\Delta N/N)(L/D^2)$ und $\Delta N$ die maximale effektive Brechzahländerung über der Strahlbreite D ist. Sind zum Beispiel N=1,5, $\Delta N=1,5\cdot10^3$, L=10 mm und D=1 mm so wird f=25 mm.

In Fig. 10 wird das erfindungsgemässe Verfahren mit zwei phasenschiebenden Elementen zur Ablenkung einer aus einem Wellenleiter ausgekoppelten Welle in zwei zueinander senkrechten Richtungen schematisch dargestellt. Die an sich bekannte integriert-optische Schaltung besteht aus einem planaren Wellenleiter 1 auf einem Substrat 2 und einem fokussierenden Gitterkoppler 8 mit gekrümmten Gitterstrichen und ortsabhängiger Gitterkonstante. Licht eines Lasers 9 wird in den planaren optischen Wellenleiter 1 eingekoppelt, die divergierende geführte Welle 3 wird von dem Gitterkoppler 8 ausgekoppelt und die ausgekoppelte Welle 3a wird zu dem Fokus 11 auf der Fläche 12 fokussiert. Durch das phasenschiebende Element 5 das im Abstand d gegenüber einem Abschnitt 1′ des planaren Wellenleiters 1 angebracht ist wird- wie bereits in Fig. 9 schematisch dargestellt wurde- die geführte Welle 3d transversal zu ihrer Ausbreitungsrichtung abgelenkt und somit der Fokus 11 auf der Fläche 12 in y Richtung ausgelenkt. Durch ein zweites nicht dargestelltes phasenschiebendes Element gegenüber dem Gitterkoppler 8 wird - wie bereits oben in Zusammenhang mit Fig. 8 beschrieben wurde - der Auskoppelwinkel $\alpha$ der ausgekoppelten Welle 3a geändert und damit der Fokus 11 auf der Fläche 12 in x Richtung ausgelenkt werden. Das erfindungsgemässe Verfahren stellt ein Laser-Scanner Verfahren dar, das beispielsweise insbesondere in der digitalen optischen Datenspeicherung eingesetzt werden kann. Dabei wird die erfindungsgemässe Vorrichtung als Lese- und/oder Schreib-Kopf benutzt. Mit dem erfindungsgemässen Verfahren können die kleinen zum Verfolgen der Spur notwendigen Korrekturen der Position des Fokus 11 auf der optischen Speicherplatte 12 sehr schnell ausgeführt werden. Dieses hat den Vorteil, dass nicht der ganze Lese- und/oder Schreib-Kopf schnell mechanisch bewegt werden muss, was die mechanische Konstruktion sehr vereinfacht. Ist nur eine Ablenkung senkrecht zur Spur erforderlich, so kann das zweite phasenschiebende Element, vorzugsweise jenes über dem Gitterkoppler 8 weggelassen werden.

Nicht dargestellt ist die Möglichkeit, dass die Welle 3a von der optischen Speicherplatte 12 nahezu senkrecht reflektiert wird, und die reflektierte Welle vom Gitterkoppler 8 in den Wellenleiter 1 zurück eingekoppelt und die eingekoppelte geführte Welle vom Gitter 8 auf vorzugsweise am Substrat 2 angebrachte Detektoren fokussiert wird.

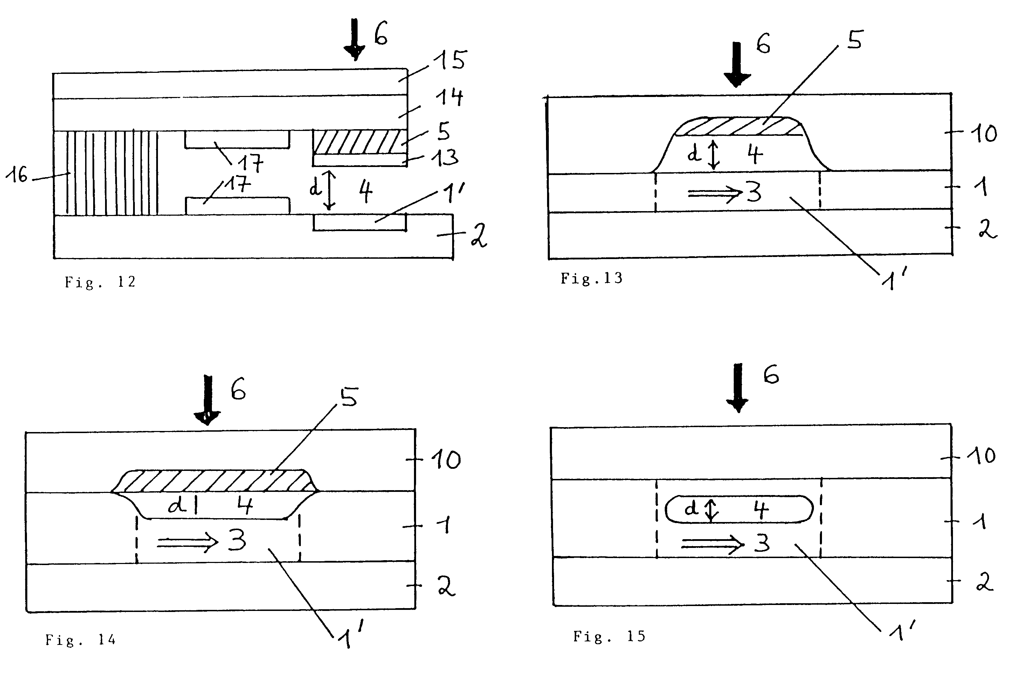

In Fig. 11 ist das erfindungsgemässe Verfahren mit einem X-Schalter als integriert-optischer Schaltung schematisch dargestellt. Der X-Schalter besteht aus zwei sich unter dem kleinen Winkel, beispielsweise 1°, entweder durchkreuzenden oder übereinander hinweg laufenden Streifenwellenleitern 1a und 1b. Eine optische Welle 3e wird in einen der beiden Streifenwellenleiter 1a oder 1b eingekoppelt. Das phasenschiebende Element 5 wird durch einen in der Aufsicht nicht dargestellten Zwischenraum 4 getrennt im Abstand d gegenüber dem Kreuzungsbereich der beiden Streifenwellenleiter-Abschnitte 1a′ und 1b′ angebracht. Wird der Abstand d in Richtung senkrecht zu den beiden Streifenwellenleiter-Abschnitten 1a′ und 1b′ keilförmig gestaltet, so werden bei einer Aenderung des Keilwinkels die effektiven Brechzahlen N in den beiden Streifenwellenleiter-Abschnitten 1a′ und 1b′ verschieden geändert, wodurch die Kopplung zwischen ihnen beeinflusst wird. Dadurch werden die Intensitäten der geführte Wellen $\overline{3a}$ und $\overline{3b}$ in den Streifenwellenleitern 1a und 1b am Ausgang des X-Schalters geändert. Der X-Schalter ist wie der Richtkoppler eine 2x2-Schalt-Matrix, die vom Kreuz-Zustand in den Parallel-Zustand geschaltet werden kann.

Die erfindungsgemässe Vorrichtung wie sie in Fig. 12 schematisch dargestellt ist, umfasst einen Wellenleiter 1 auf einem Substrat 2, und ein an einer miniaturisierten Zunge 14 befestigtes phasenschiebendes Element 5 mit einer dem Wellenleiter-Abschnitt 1′ zugewandten oberflächen-nahen Schicht 13. Die Zunge 14 ist mit dem Halter 16 am Substrat 2 befestigt. Zwischen dem phasenschiebenden Element 5, bzw. dessen Oberflächen-Schicht 13 und dem Wellenleiter-Abschnitt 1′ im Abstand d befindet sich der beispielsweise mit Luft oder einem anderen Gas gefüllte oder evakuierte Zwischenraum 4. Somit kann durch eine sehr kleine Kraft 6 die Zunge 14 gebogen und damit der Abstand d zwischen dem phasenschiebenden Element 5 und dem Wellenleiter-Abschnitt 1′ geändert werden. Beim erfindungsgemässen Verfahren kann aus der über die Phasenänderungen der geführten Welle 3 die Abstandsänderung $\Delta d$ und somit die an die Elektroden 17 angelegte Spannung bestimmt werden. Die Kraft 6 ist beispielsweise eine elektrostatische Anziehungs- oder Abstossungs-Kraft zwischen den am Substrat 2 bzw. an der Zunge 14 angebrachten Elektroden 17 an welche eine Spannungsdifferenz angelegt wird. Die Kraft 6 kann auch eine auf die Zunge 14 ausgeübte mechanisch erzeugte Kraft sein, oder die Trägheits- oder Beschleunigungs-Kraft welche bei einer Beschleunigung der ganzen erfindungsgemässen Vorrichtung auf die Zunge 14 mit phasenschiebendem Element 5 wirkt. In letzterem Fall besteht die Schicht 15 vorzugsweise zur Erhöhung der trägen Masse aus einem Metall, beispielsweise aus Al oder Au. Die Kraft 6 kann auch durch eine Temperatur-änderung über die thermische Ausdehnung von einzelnen oder aller Bauteile aus der Gruppe Wellenleiter 1, Substrat 2, phasenschiebendes Element 5 und dessen Befestigung 12,16 am Wellenleiter 1 bzw. Substrat 2 erzeugt werden. Bespielsweise kann die auf der Zunge 14 angebrachte Schicht 15 einen anderen Ausdehnungskoeffizienten als die Zunge 14 haben, was bei einer Temperaturänderung zu einer Verbiegung der Zunge 14 und damit zu einer Abstandsänderung $\Delta d$ führt. Die Zunge 14 kann beispielsweise aus $SiO_2$ und die Schicht 15 aus einer Metallschicht sein. Die Temperaturänderung kann beispielsweise durch von aussen einfallendes Licht oder Infrarot-Strahlung, welche in der Schicht 15, der Zunge 14 oder dem phasenschiebenden Element 5, im Wellenleiter-Abschnitt 1′ oder Substrat 2 absorbiert wird, erzeugt werden, oder durch teilweise Absorption der geführten Welle 3 im Wellenleiter-Abschnitt 1′ oder im phasenschiebenden Element 5. Im letztgenannten Fall wird das Verhalten der erfindungsgemässen Vorrichtung nichtlinear, d.h. abhängig von der Leistung der geführten Welle 3.

Die Kraft 6 kann auch piezoelektrisch erzeugt werden, beispielsweise kann die Schicht 15 piezoelektrisch sein und durch Anlegen einer Spannung ihre Länge ändern, wodurch sich die Zunge 14 verbiegt und damit der Abstand d geändert wird.

Die erfindungsgemässe Vorrichtung wie sie in Fig. 13 schematisch dargestellt ist, umfasst einen auf einem Substrat 2 angebrachten Wellenleiter 1, der mit einer Schutzschicht 10 versehen ist, und ein oberhalb des Wellenleiter-Abschnitts 1′ liegendes phasenschiebendes Element 5. Zwischen Wellenleiter 1 und Substrat 2 kann eine nicht dargestellte Trennschicht 7 liegen, deren Brechzahl kleiner als die des Wellenleiters 1 sein muss. Sie dient dazu den Wellenleiter 1 vom Substrat 2 optisch zu trennen, sodass das Substrat dann auch absorbierend sein darf. Die Schutzschicht 10 dient dazu, eine unerwünschte Beeinflussung der im Wellenleiter 1 geführten Welle von aussen zu verhindern; sie besitzt eine Brechzahl die kleiner ist als die Brechzahl des Wellenleiters 1 und eine Schichtdicke welche grösser als die Eindringtiefe des quergedämpften Feldes der geführten Welle 3 in der Schutzschicht 10 ist. In der Schutzschicht 10 ist oberhalb des Wellenleiter-Abschnitts 1′ eine Aussparung angebracht, die als Zwischenraum 4 den Abstand d zwischen dem Wellenleiter-Abschnitt 1′ und dem phasenschiebendem Element 5 definiert. Das phasenschiebende Element 5 kann beispielsweise der unmittelbar an den Zwischenraum 4 angrenzende Bereich der Schutzschicht 10 sein. Der oberhalb der Aussparung verbleibende Teil der Schutzschicht 10 hat die Form einer miniaturisierten Brücke oder Membran über dem Wellenleiter-Abschnitt 1′. Durch eine kleine Kraft 6 kann diese Brücke oder Membran deformiert und somit der Abstand d variiert werden. Die Kraft 6 kann beispielsweise durch pneumatische oder hydrostatische Drücke oder durch Schall- oder Ultraschall-Wellen erzeugt werden. Daher kann die erfindungsgemässe Vorrichtung beispielsweise zur Messung von Drücken und Druckänderungen und als Mikrophon oder Hydrophon verwendet werden.

Die erfindungsgemässe Vorrichtung wie sie in Fig. 14 schematisch dargestellt ist, unterscheidet sich von von der in Fig. 13 dargestellten Vorrichtung darin, dass die als Zwischenraum 4 dienende Aussparung im Wellenleiter 1′ selbst angebracht ist, und zwar an der Grenzfläche zur Schutzschicht 10. Ein unmittelbar an den Zwischenraum 4 angrenzender Bereich der Schutzschicht 10 wirkt als phasenschiebendes Element 5.

Nicht dargestellt ist die weitere Möglichkeit, dass die Aussparung im Wellenleiter-Abschnitt 1′ an der Grenzfläche zur nicht dargestellten Trennschicht 7, bzw. wenn diese nicht vorhanden ist, an der Grenzfläche zum Substrat 2 angebracht ist. Die Aussparung definiert dann als Zwischenraum 4 den Abstand d zwischen dem Wellenleiter-Abschnitt 1′ und dem phasenschiebenden Element 5, als welches der unmittelbar an den Zwischenraum 4 angrenzende Bereich der Trennschicht 7, bzw. wenn diese nicht vorhanden ist, des Substrats 2 wirkt.

Die erfindungsgemässe Vorrichtung wie sie in Fig. 15 schematisch dargestellt ist, unterscheidet sich von von der in Fig. 14 dargestellten Vorrichtung darin, dass die als Zwischenraum 4 dienende Aussparung im Inneren des Wellenleiter-Abschnitts 1′ selbst angebracht ist. Die direkt an den Zwischenraum 4 angrenzenden und von diesem getrennten Bereiche des Wellenleiter-Abschnitts 1′ wirken beide gleichzeitig als phasenschiebendes Element 5 und als Wellenleiter. Nicht dargestellt ist die weitere Möglichkeit, dass zwei je auf einem Substrat angebrachte (entweder für sich allein schon wellenleitende oder wegen zu geringer Schichtdicke nicht wellenleitende) Schichten, welche eine höhere Brechzahl als das jeweilige Substrat haben, nur in einem Abschnitt 1′ mit Abstandshaltern der Dicke d, welche einen Zwischenraum 4 zwischen ihnen definieren, voneinander getrennt sind ausserhalb des Abschnitts 1' aber miteinander verbunden sind und den Wellenleiter 1 bilden, beispielsweise als einstückiger Wellenleiter 1 ausgebildet sind. Im Abschnitt 1' wirken die vom Zwischenraum 4 getrennten Schichten beide gleichzeitig als Wellenleiter und als phasenschiebendes Element 5.

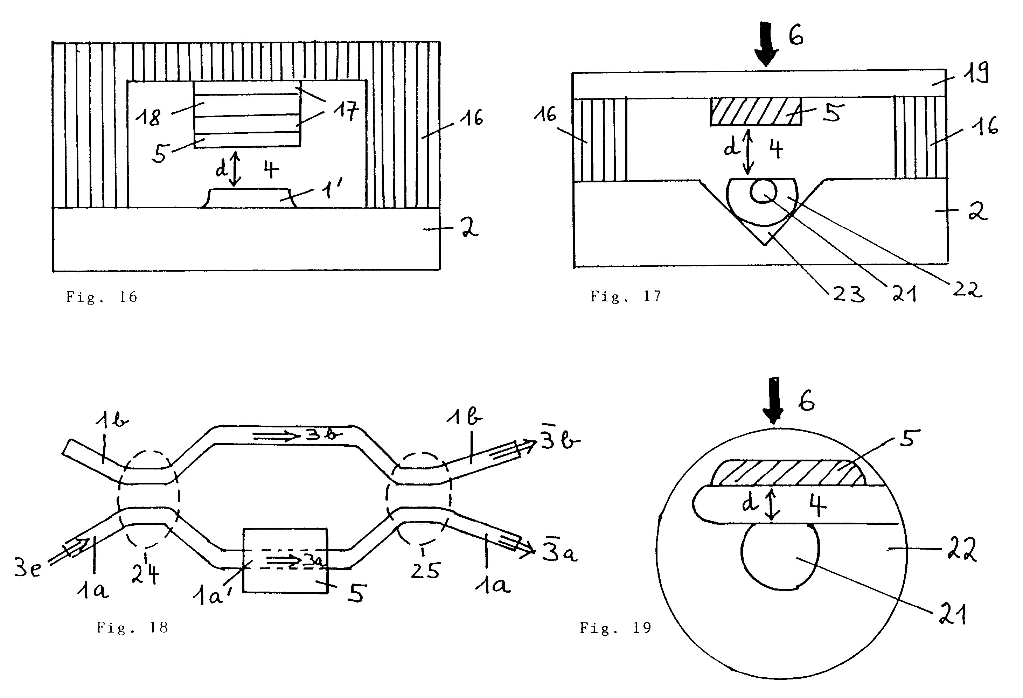

Die erfindungsgemässe Vorrichtung wie sie in Fig. 16 schematisch dargestellt ist, umfasst einen auf einem Substrat 2 angebrachten Wellenleiter 1 und ein phasenschiebendes Element 5 das gegenüber dem Wellenleiter-Abschnitt 1' im Abstand d angeordnet ist. Das phasenschiebende Element 5 ist an einem piezoelektrischen Element angebracht, welches aus der piezoelektrischen Schicht 18 und Elektroden 17 besteht. Das piezoelektrische Element ist seinerseits mit einer Befestigung 16 am Substrat 2 befestigt. Durch Anlegen einer Spannung an die Elektroden 17 wird durch die dabei erzeugten in der Zeichnung nicht dargestellten piezoelektrischen Kräfte die Dicke der piezoelektrischen Schicht 18 und somit der Abstand d geändert und damit die Phase der geführten Welle 3 im Wellenleiter-Abschnitt 1' geändert.

Eine weitere Möglichkeit eine Abstandsänderung $\Delta$d zu erzeugen besteht darin durch eine Temperaturänderung über die thermische Ausdehnung von einzelnen oder aller Bauteile aus der Gruppe Wellenleiter 1, Substrat 2, phasenschiebendes Element 5 und dessen Befestigung 16 am Substrat 2 zu erzeugen. Dabei kann die Temperaturänderung durch elektrische Ströme entweder in einer insbesondere aus Indium-Zinn-Oxyd (ITO) oder Metall bestehenden Heizschicht oder einem thermoelektrischen (Peltier) Element, welches an die Stelle der Schicht 18 tritt, beim Anlegen einer Spannung an die Elektroden 17 erzeugt werden. Nicht dargestellt, ist die Möglichkeit die piezoelektrische Schicht 18, eine Heizschicht oder eine thermoelektrische Schicht und die Elektroden 17 nicht am phasenschiebenden Element 5 sondern -mit Trennschichten - zwischen Wellenleiter-Abschnitt 1' und Substrat 2 oder am Substrat 2 anzubringen.

In Fig. 17 ist das erfindungsgemässe Verfahren mit einer Faser als Wellenleiter schematisch dargestellt. Die Faser besteht aus dem Faser-Kern 21 und dem Mantel 22. Die optische Welle 3, welche in der Querschnittszeichnung nicht dargestellt ist, wird im Faser-Kern 21 geführt, analog wie in einem Streifenwellenleiter 1 in der integrierten Optik. Der Faser-Kern 21 wird daher auch als Wellenleiter 1 bezeichnet. In den Mantel 22 reicht das Feld der geführten Welle als quergedämpfte Welle hinein, deren Feldstärke mit zunehmender Entfernung vom Faser-Kern 21 näherungsweise exponentiell abfällt. In einem Abschnitt 1' des Faser-Wellenleiters 1 ist der Mantel 22 auf einer Seite der Faser wie gezeichnet ganz oder teilweise entfernt. Daher kann das quergedämpfte Feld der geführten Welle 3 durch den Zwischenraum 4 mit dem im Abstand d von der Faser angebrachten phasenschiebenden Element 5 in Wechselwirkung treten. Durch eine Variation des Abstands d wird die effektive Brechzahl N der im Abschnitt 1' des Faser-Wellenleiters, d.h. im Faser-Kern 21, geführten Welle 3 und damit ihre Phase geändert, völlig analog wie beim erfindungsgemässen Verfahren mit einem planaren oder Streifenwellenleiter. Die Faser ist zur Befestigung in eine Rille oder Nut 23 eines Substrats 2 eingelegt, wobei vorzugsweise das Substrat ein Silizium-Wafer ist, in dem die Rille oder Nut 23 durch Aetzen erzeugt wurde. Das phasenschiebende Element 5 ist mit einer Befestigung 16 und Brücke 19 am Substrat 2 befestigt. Mit einer Kraft 6 wird der Abstand d und damit die Phase der im Wellenleiter-Abschnitt 1' geführten Welle geändert. Die Aenderung des Abstandes d kann auch durch die Kräfte einer beispielsweise an der dem Wellenleiter-Abschnitt 1' zugewandten Oberfläche der Brücke 19 entlanglaufenden akustischen Oberflächenwelle, welche eine Auslenkung der Oberfläche in Normalenrichtung bewirken, erzeugt werden.

In Fig. 18 ist das erfindungsgemässe Verfahren mit einem Mach-Zehnder-Interferometer als faser-optischer Schaltung schematisch dargestellt. Das nach dem gegenwärtigen Stand der Technik bekannte Interferometer wird von den Faser-Wellenleitern 1a und 1b gebildet, welche am Eingang und am Ausgang des Interferometers mit 3dB-Kopplern 24 und 25 miteinander gekoppelt sind. Eine im Wellenleiter 1a einfallende geführte Welle 3e wird vom 3dB-Koppler 24 am Eingang in zwei Teilwellen 3a und 3b in den beiden Armen des Interferometers aufgeteilt. Die Intensitäten der Wellen $\bar{3}a$ und $\bar{3}b$, welche am Ausgang des Interferometers hinter dem 3dB-Koppler 25 in den Faser-Wellenleitern 1a und 1b auftreten sind proportional zu $\sin^2[(\Phi_a-\Phi_b)/2]$ bzw. $\cos^2[(\Phi_a-\Phi_b)/2]$, wobei $\Phi_a-\Phi_b$ die Phasendifferenz der Teilwellen 3a und 3b direkt vor dem Koppler 25 ist. Bei dem erfindungsgemässen Verfahren ist ein phasenschiebendes Element 5 von einem nicht dargestellten Zwischenraum 4 getrennt gegenüber dem Abschnitt 1a' des Wellenleiters 1a angeordnet. Bei einer Aenderung des - in der Aufsicht nicht dargestellten - Abstands d zwischem den phasenschiebenden Element 5 und dem Faser-Wellenleiter 1a' wird die effektive Brechzahl der Teilwelle 3a und damit ihre Phase und somit die Phasendifferenz $\Phi_a-\Phi_b$ geändert. Mit einer Abstandsänderung $\Delta$d wird die Intensitäts-Modulation der Wellen $\bar{3}a$ und $\bar{3}b$ am Ausgang des Interferometers bewirkt.Wird der Abstand d so gewählt, dass die Phasendifferenz $\Phi_a-\Phi_b=2\pi m$ bzw. $\Phi_a-\Phi_b=\pi(2m+1)$ ist, wobei m eine ganze Zahl bedeutet, so wird die Welle 3e vom Eingang 1a auf den Ausgang 1b bzw. den Ausgang 1a geschaltet. Fällt gleichzeitig eine weitere Welle am Eingang 1b ein, so wird sie auf den jeweils anderen der beiden Ausgänge 1a oder 1b geschaltet. Mit dem erfindungsgemässen Verfahren wirkt das Mach-Zehnder-Interferometer als 2x2-Schalt-Matrix, welche durch eine Abstandsänderung $\Delta$d die gerade eine Aenderung der Phasendifferenz $\Phi_a-\Phi_b$ um $\pi$ bewirkt vom Parallel-Zustand, in dem der Eingang 1a nur mit dem Ausgang 1a und der Eingang 1b nur mit dem Ausgang 1b optisch verbunden sind, in den Kreuz-Zustand geschaltet wird, in dem der Eingang 1a nur mit dem Ausgang 1b und der Eingang 1b nur mit dem Ausgang 1a verbunden ist. Das beschriebene erfindungsgemässe Verfahren kann völlig analog auch mit einem integriert-optischen anstelle des faser-optischen Mach-Zehnder-Interferometer realisiert werden. Bei dem integriert-optischen Mach-Zehnder-Interferometer sind dann ebenfalls 3dB-Koppler zu verwenden anstelle der bei dem in Fig. 3 dargestellten Mach-Zehnder-Interferometer mit Y-Verzweigungen als Strahlteiler und Strahlvereiniger.

Nicht dargestellt ist die weitere Möglichkeit mit an sich bekannten Matrix-Anordnungen von Mach-Zehnder-Interferometern mit dem erfindungsgemässen Verfahren mit mindestens einem phasenschiebenden Element in jedem Mach-Zehnder-Interferometer jeden von N Eingangs-Wellenleitern mit einem von M Ausgangs-Wellenleitern optisch zu verbinden; die erfindungsgemässe Vorrichtung wirkt dann als NxM-Schalt-Matrix, wobei N und M ganze Zahlen >2 sind.

Die erfindungsgemässe Vorrichtung wie sie in Fig. 19 schematisch dargestellt ist umfasst einen aus Faser-Kern 21 und Mantel 22 bestehenden Faser-Wellenleiter mit einer Aussparung, vorzugsweise in Form eines Schlitzes, Loches oder Bohrung, im Mantel 22 welche als Zwischenraum 4 den Abstand d zwischen dem Faser-Kern 21 als Wellenleiter-Abschnitt 1' und dem phasenschiebenden Element 5 definiert. Das phasenschiebende Element 5 ist dabei vorzugsweise der an den Zwischenraum 4 angrenzende Bereich des Mantels 22. Durch eine Kraft 6 wird der Abstand d variiert und damit die effektive Brechzahl N der nicht dargestellten im Wellenleiter-Abschnitt 1' geführten Welle 3 und somit auch deren Phase.

Nicht dargestellt ist die Möglichkeit, dass die Aussparung auch teilweise oder ganz im Faser-Kern 21 angebracht wird, wobei sie beispielsweise auch die Form einer zylindrischen Bohrung entlang der Faser-Achse haben kann, in welchem Falle die Faser im Abschnitt 1' also hohl ist.

Die Aussparungen können als Bohrungen, Löcher und Schlitze beispielsweise mit Puls-Laser, z.B. Nd-YAG- oder Excimer-Lasern, in Glas- oder Kunststoff-Fasern angebracht werden.

Das erfindungsgemässe Verfahren eignet sich beispielsweise insbesondere für folgende Applikationen:

1) in der optischen Kommunikations-Technik als Richtungs-Schalter, d.h. zum Schalten von geführten Wellen zwischen verschiedenen Ausgängen der integriert-optischen Schaltung, und als Phasen- und Intensitäts-Modulator.

2) in der Messtechnik zur Messung von sehr kleinen Verschiebungen mit einer Auflösung im nm und sub-nm-Bereich, von sehr kleinen Kräften, zur Messung von Drücken und Druckänderungen einschliesslich von Schalldruck (als Mikrophon und Hydrophon), und von Beschleunigungen und Schwingungen.

## Patentansprüche

1. Optisches mikro-mechanisches Verfahren zur Phasenänderung geführter Wellen, dadurch gekennzeichnet, dass a) in einem Wellenleiter (1), oder in einer an sich bekannten integriert-optischen oder faser-optischen Schaltung die mindestens einen Wellenleiter (1) enthält, die effektive Brechzahl N und damit die Phase der in einem Abschnitt (1') des Wellenleiters (1) geführten optischen Welle (3) geändert wird, indem der Abstand d zwischen dem Wellenleiter-Abschnitt (1') und einem diesem gegenüber angebrachten phasenschiebenden Element (5) geändert wird, wobei der Abstand d so klein gewählt wird, dass die im Wellenleiter-Abschnitt (1') geführte Welle (3) über ihr mit zunehmender Entfernung vom Wellenleiter (1') exponentiell abfallendes quergedämpftes Feld durch den mit einem absorptionsarmen Medium mit einer Brechzahl n<N gefüllten Zwischenraum (4) mit dem phasenschiebenden Element (5), oder mindestens mit dessen dem Wellenleiter-Abschnitt (1') zugewandten oberflächen-nahen Schichten (13) in Wechselwirkung steht, und b) keine oder nur wenig Leistung der geführten Welle (3) in das phasenschiebende Element (5) abgestrahlt oder von diesem absorbiert wird.

2. Verfahren nach Anspruch 1, dadurch gekennzeichnet, dass der Abstand d zwischen Wellenleiter-Abschnitt (1') und phasenschiebendem Element (5) kleiner als vier Eindringtiefen $\Delta z = (\lambda/2\pi)(N^2-n^2)^{1/2}$ des quergedämpften Feldes in den Zwischenraum (4), wobei $\lambda$ die Lichtwellenlänge im Vakuum bezeichnet, vorzugsweise kleiner als eine Eindringtiefe $\Delta z$ ist.

3. Verfahren nach Ansprüchen 1 oder 2, dadurch gekennzeichnet, dass der Zwischenraum (4) zwischen dem Abschnitt (1') des Wellenleiters (1) und dem phasenschiebenden Element (5) mit Luft oder einem anderen Gas gefüllt ist, und/oder aus einem kompressiblen und/oder aus dem Zwischenraum (4) seitlich herausdrückbaren Medium besteht, oder evakuiert ist.

4. Verfahren nach einem der Ansprüche 1 bis 3, dadurch gekennzeichnet, dass die Aenderung des Abstandes d zwischen dem phasenschiebenden Element (5) und dem Abschnitt (1') des Wellenleiters (1) durch eine Kraft (6) oder mehrere Kräfte bewirkt wird, vorzugsweise durch mechanische Kräfte, und/oder pneumatische oder hydrostatische Drücke, oder durch die von Schall- oder Ultraschall-Wellen ausgeübten Kräfte, und/oder

EP 0 394 219 B1

Beschleunigungs-Kräfte, und/oder elektrostatisch, elektromagnetisch oder piezoelektrisch erzeugte Kräfte, oder durch die von akustischen Oberflächenwellen erzeugten Kräfte.

5. Verfahren nach einem der Ansprüche 1 bis 3, dadurch gekennzeichnet, dass die Aenderung des Abstandes d zwischen dem phasenschiebenden Element (5) und dem Abschnitt (1') des Wellenleiters (1) über thermische Ausdehnung oder Verbiegung oder Deformation einzelner oder aller Bauteile aus der Gruppe Wellenleiter (1), Substrat (2), phasenschiebendes Element (5) und dessen Befestigung (16;16,14,15;16,19) am Wellenleiter (1) oder Substrat (2) durch Temperatur-änderungen bewirkt wird, welche insbesondere entweder durch elektrische Ströme in einer elektrisch leitenden, beispielsweise aus Indium-Zinn-Oxyd (ITO) bestehenden, Heizschicht, oder in einem thermo-elektrischen Element, welche auf dem Substrat (2), am phasenschiebenden Element (5) oder an dessen Befestigung (16;16,14,15;16,19) angebracht sind, oder durch Absorption von Licht oder Infrarot-Strahlung im Wellenleiter-Abschnitt (1') oder im phasenschiebenden Element (5), erzeugt werden, wobei entweder das Licht oder die Infrarot-Strahlung von aussen einfällt oder die geführte optische Welle (3) selbst teilweise absorbiert wird.

6. Verfahren nach einem der Ansprüche 1 bis 5, dadurch gekennzeichnet, dass der Wellenleiter (1) als planarer oder Streifenwellenleiter auf einem Substrat (2) ausgebildet ist.

7. Verfahren nach einem der Ansprüche 1 bis 5, dadurch gekennzeichnet, dass der Wellenleiter (1) als Faser-Kern (21) eines Faser-Wellenleiters ausgebildet ist, bei welchem im Wellenleiter-Abschnitt (1') der Faser-Mantel (22) vorzugsweise auf einer Seite der Faser ganz oder teilweise entfernt ist.

8. Verfahren nach einem der Ansprüche 1 bis 7, dadurch gekennzeichnet, dass eine optische Welle (3e) in einen Wellenleiter (1) eingekoppelt und in diesem geführt und auf ein integriert-optisches oder faser-optisches Interferometer, vorzugsweise ein Mach-Zehnder-Interferometer oder Michelson-Interferometer, einfallen gelassen wird, und dass der Abstand d zwischen einem Abschnitt (1a') des Wellenleiters (1a) in einem Arm des Interferometers und dem diesem gegenüber angebrachten phasenschiebenden Element (5) variiert wird, wodurch die Phase der geführten Welle (3a) im Wellenleiter-Abschnitt (1a') und damit die Intensitäten der geführten Wellen (3c;3a,3b) am Ausgang des Interferometers geändert wird, und dass entweder der Abstand als Funktion der Zeit variiert wird und damit den Wellen (3c;3a,3b) eine gewünschte Intensitäts-Modulation aufgeprägt wird, oder dass durch Ein-wirkung von Kräften (6) oder Temperaturänderungen hervorgerufene unbekannte Aenderungen des Abstandes d aus den Intensitäts-Aenderungen einer der Wellen (3c;3a,3b) bestimmt werden.

9. Verfahren nach einem der Ansprüche 1 bis 7, dadurch gekennzeichnet, dass eine optische Welle (3e) in einen von zwei einen Richtkoppler bildenden Streifenwellenleiter (1a,1b) eingekoppelt und in diesem geführt wird, und angebrachten phasenschiebenden Element (5) variiert wird, und damit die Intensitäten der geführten Wellen (3a,3b) in den beiden Wellenleitern (1a,1b) am Ausgang geändert werden oder die geführte Welle (3e) von einem auf den anderen Wellenleiter (1a,1b) am Ausgang des Richtkopplers geschaltet wird.

10. Verfahren nach einem der Ansprüche 1 bis 7, dadurch gekennzeichnet, dass der Abstand d zwischen einem Abschnitt (1') eines optischen Wellenleiters (1) im Inneren eines integriert-optischen oder faser-optischen Resonators, vorzugsweise eines Fabry-Perot-Resonators oder Ring-Resonators, und einem diesem gegenüber angebrachten phasenschiebenden Element (5) variiert wird und dadurch die Resonanzfrequenzen des Resonators und sein Reflexions- und Transmissions-Vermögen geändert werden, und dass entweder eine geführte optische Welle (3e) auf den Resonator einfällt und die Intensitäten der reflektierten (3r) und transmittierten Wellen (3t) geändert werden, oder dass im Inneren des Resonators durch Verstärkung in einem aktiven Medium geführte Wellen erzeugt werden, deren Wellenlängen geändert werden.

11. Verfahren nach einem der Ansprüche 1 bis 7, dadurch gekennzeichnet, dass eine in einem optischen Wellenleiter (1) geführte Welle (3) auf ein als Bragg-Reflektor dienendes Gitter (8) einfallen gelassen wird, und dass der Abstand d zwischen dem Wellenleiter (1) und einem im Bereich des Gitters (8) diesem gegenüber angebrachten phasenschiebenden Element (5) variiert wird, wodurch die Wellenlänge für welche optimale Bragg-Reflexion auftritt und das Reflexions- und Transmissions-Vermögen des Bragg-Reflektors geändert werden und somit die Intensitäten der transmittierten (3t) und reflektierten (3r) geführten Wellen abhängig von ihrer Frequenz geändert werden, oder dass geführte Wellen 3 im Bereich des Gitters (8) in einem Wellenleiter 1 mit Verstärkung, d.h. in einem sogenannten DFB (distributed feedback laser) erzeugt werden, wodurch deren Wellenlängen, d.h. die Emissionsfrequenzen des DFB-Lasers geändert werden.

12. Verfahren nach eine der Ansprüchen 1 bis 7, dadurch gekennzeichnet, dass eine optische Welle (3e) mit einem Gitterkoppler (8) in einen Wellenleiter (1) eingekoppelt wird und dass der Abstand d zwischen dem Wellenleiter-Abschnitts (1') und einem diesem gegenüber im Bereich des Gitterkopplers (8) angebrachten phasenschiebenden Elementes (5) variiert wird, wodurch die Intensität der eingekoppelten geführten Welle (3) und somit auch die Intensität des nicht-eingekoppelten Teils der einfallenden optischen Welle (3e) geändert wird.

13. Verfahren nach einem der Ansprüche 1 bis 7, dadurch gekennzeichnet, dass eine in einem optischen Wellenleiter (1) geführte optische Welle (3) von einem Gitterkoppler (8) ausgekoppelt wird und dass der

14

Abstand d zwischen dem Wellenleiter-Abschnitt (1′) und einem diesem gegenüber im Bereich des Gitterkopplers (8) angebrachten phasenschiebenden Element (5) gleichmässig und/oder in Richtung der Ausbreitungsrichtung der geführten Welle (3) keilförmig variiert wird, wodurch die Richtung und/oder Fokussierung des ausgekoppelten Strahles (3a) geändert werden.

14. Verfahren nach einem der Ansprüche 1 bis 7, dadurch gekennzeichnet, dass eine optische Welle (3) in einem planaren optischen Wellenleiter (1) geführt wird und dass der Abstand d zwischen einem Abschnitt (1′) des Wellenleiters (1) und einem diesem gegenüber angebrachten phasenschiebenden Element (5) transversal zur Ausbreitungsrichtung der geführten Welle (3) keilförmig gestaltet und der Keilwinkel variiert wird, wodurch die geführte Welle (3) abgelenkt wird und der Ablenkwinkel ($\beta$) der abgelenkten Welle (3d) hinter dem phasenschiebenden Element (5) geändert wird, und/oder gekrümmt gestaltet wird und diese Krümmung variiert wird, wodurch die geführte Welle (3d) hinter dem phasenschiebenden Element (5) fokussiert oder defokussiert wird und die Fokussierung geändert wird.

15. Verfahren nach Ansprüchen 13 und oder 14, dadurch gekennzeichnet, dass Licht eines Lasers (9) in einen planaren Wellenleiter (1) auf einem Substrat (2) eingekoppelt wird und divergierend auf einen Gitterkoppler (8) mit gekrümmten Gitterstrichen und nicht-konstanter Gitterperiode fällt und von diesem ausgekoppelt wird, wobei die ausgekoppelte Welle (3a) zu einem Fokus (11) fokussiert wird, und dass mit einem phasenschiebendem Element (5) gegenüber dem Teil (1′) des planaren Wellenleiters (1), und/oder mit einem phasenschiebendem Element (5) gegenüber dem Gitterkoppler (8) der Fokus (11) in einer bzw. in zwei zueinander senkrechten Richtungen abgelenkt wird.

16. Verfahren nach einem der Ansprüche 1 bis 7, dadurch gekennzeichnet, dass eine geführte Welle (3e) in einen der beiden sich unter kleinen Winkel kreuzenden einen X-Schalter bildenden Streifenwellenleiter (1a,1b) eingekoppelt wird, und dass der Abstand d zwischen den Wellenleiter-Abschnitten (1a′,1b′) in ihrem Kreuzungsbereich und einem diesen gegenüber angebrachtem phasenschiebenden Element (5) geändert wird, und zwar vorzugsweise so dass sich ein in Richtung senkrecht zu den beiden Streifenwellenleitern keilförmiger Zwischenraum (4) zwischen phasenschiebendem Element (5) und den Wellenleiter-Abschnitten (1a′,1b′) bzw. der Oberfläche des Substrats ausbildet und der Keilwinkel variiert wird, wodurch die Welle (3e) am Ausgang des X-Schalters von einem Streifenwellenleiter (1a) auf den anderen Streifenwellenleiter (1b) geschaltet wird, bzw. die Intensitäten der geführten Wellen ($\overline{3a}$) und ($\overline{3b}$) am Ausgang moduliert werden.

17. Verfahren nach einem der Ansprüche 1 bis 9 oder 16, dadurch gekennzeichnet, dass in einem integriert-optischen oder faser-optischen Mach-Zehnder-Interferometer, Richtkoppler oder X-Schalter, welche als 2x2-Schalt-Matrizen zwei Eingangs-Wellenleiter (1a) und (1b) mit zwei Ausgangs-Wellenleitern (1a) und (1b) optisch verbinden, der Abstand d zwischen dem phasenschiebenden Element (5) und den Wellenleiter-Abschnitten (1a′;1a′,1b′) so eingestellt wird, dass entweder der Eingangs-Wellenleiter (1a) nur mit dem Ausgangs-Wellenleiter (1a) und gleichzeitig der Eingangs-Wellenleiter (1b) nur mit dem Ausgangs-Wellenleiter (1b) optisch verbunden wird, oder der Eingangs-Wellenleiter (1a) nur mit dem Ausgangs-Wellenleiter (1b) und gleichzeitig der Eingangs-Wellenleiter (1b) nur mit dem Ausgangs-Wellenleiter (1a) optisch verbunden wird, und dass durch eine Aenderung des Abstandes d die Schalt-Matrix von dem erstgenannten Parallel-Zustand in den letztgenannten Kreuz-Zustand umgeschaltet werden kann.

18. Verfahren nach Anspruch 17, dadurch gekenzeichnet, dass in aus Anordnungen von Richtkopplern, Mach-Zehnder-Interferometern oder X-Schaltern, welche als 2x2-Schalt-Matrizen dienen und welche je mindestens ein phasenschiebendes Element (5) enthalten, bestehenden NxM-Schalt-Matrizen die Abstände d der phasenschiebenden Elemente (5) von den jeweiligen Wellenleiter-Abschnitten (1a′;1a′,1b′) in den 2x2-Schalt-Matrizen so eingestellt werden, dass jeder von N Eingangs-Wellenleitern mit einem oder mehreren gewünschten von M Ausgangs-Wellenleitern optisch verbunden wird, wobei N und M ganze Zahlen >2 sind.

19. Vorrichtung zur Durchführung des Verfahrens nach einem der Ansprüche 1 bis 18, dadurch gekennzeichnet, dass sie einen optischen Wellenleiter (1) oder eine integriert-optische oder faser-optische Schaltung, die mindestens einen optischen Wellenleiter enthält, und ein gegenüber dem Abschnitt (1′) des Wellenleiters (1) durch einem Zwischenraum (4) getrennt in einem kleinen variierbarem Abstand d angebrachtes phasenschiebendes Element (5) umfasst, wobei dieses als ganzes oder seine dem Wellenleiter-Abschnitt (1′) zugewandten oberflächen-nahen Schichten (13) aus bei der benutzten Lichtwellenlänge $\lambda$ nicht oder wenig absorbierenden Materialien mit Brechzahlen $n_E$ kleiner als die effektive Brechzahl N der im Wellenleiter-Abschnitt (1′) geführten Welle (3) bestehen.

20. Vorrichtung nach Anspruch 19, dadurch gekennzeichnet, dass die dem Wellenleiter-Abschnitt (1′) zugewandte Oberfläche des phasenschiebenden Elements (5), bzw. die darauf befindlichen Schichten (13), entweder glatt sind oder mit einer Oberflächenstruktur, beispielsweise einem als Einkoppler, Auskoppler, oder Bragg-Reflektor dienenden Gitter (8) versehen ist.

21. Vorrichtung nach einem der Ansprüche 19 oder 20, dadurch gekenzeichnet, dass das phasenschiebende Element (5) gegenüber dem Wellenleiter-Abschnitt (1′) an einer Zunge (14), Brücke (19) oder Membran angebracht ist, welche mit einer Befestigung (16) am Wellenleiter (1) oder Substrat (2) oder an der Schutzschicht (10) befestigt ist, wobei die Zunge (14), Brücke (19) oder Membran vorzugsweise miniaturisiert sind und beispielsweise aus SiO$_2$ bestehen, und vorzugsweise mit einer weiteren Schicht (15), welche beispielsweise einen anderen thermischen Ausdehnungskoeffizienten hat, oder eine Heizschicht, eine piezoelektrische Schicht oder eine Metallschicht ist, bedeckt ist.

22. Vorrichtung nach einem der Ansprüche 19 bis 21, dadurch gekenzeichnet, dass unter dem Wellenleiter-Abschnitt (1') im Substrat (2) oder in der zwischen Wellenleiter (1) und Substrat (2) liegenden Trennschicht (7) eine Aussparung als Zwischenraum (4) zwischen Wellenleiter-Abschnitt (1') und phasenschiebendem Element (5) angebracht ist, wobei vorzugsweise das phasenschiebende Element (5) mit dem an den Zwischenraum (4) angrenzenden Bereich von Substrat (2) oder Trennschicht (7) identisch ist, oder dass oberhalb des Wellenleiter-Abschnitts (1') in der Schutzschicht (10) mit welcher der Wellenleiter (1) versehen ist eine Aussparung als Zwischenraum (4) zwischen Wellenleiter-Abschnitt (1') und phasenschiebendem Element (5) angebracht ist, wobei vorzugsweise das phasenschiebende Element (5) mit dem an den Zwischenraum (4) angrenzenden Bereich der Schutzschicht (10) identisch ist, oder dass bei einem Faser-Wellenleiter im Abschnitt (1') im Mantel (22) eine Aussparung als Zwischenraum (4) zwischen Faser-Kern (21) und dem phasenschiebendem Element (5) angebracht ist, wobei vorzugsweise das phasenschiebende Element (5) mit dem an den Zwischenraum (4) angrenzenden Bereich des Mantels (22) identisch ist.

23. Vorrichtung nach Anspruch 19, dadurch gekenzeichnet, dass eine Aussparung als Zwischenraum (4) im Inneren des Wellenleiter-Abschnitts (1') angeordnet ist und die an den Zwischenraum (4) angrenzenden Bereiche des Wellenleiter-Abschnitts (1') gleichzeitig als Wellenleiter (1') und als phasenschiebendes Element (5) wirken.

24. Vorrichtung nach einem der Ansprüche 19, 22 oder 23, dadurch gekennzeichnet, dass Aussparungen beispielsweise in der Form von Schlitzen, Bohrungen oder Löchern in Wellenleiter-Abschnitt (1'), Schutz-Schicht (10), Trenn-schicht (7) oder Substrat (2), in Faser-Wellenleitern im Kern (21) oder im Mantel (22) als Zwischenraum (4) angebracht sind.

25. Vorrichtung nach einem der Ansprüche 19 bis 21, dadurch gekennzeichnet, dass das phasenschiebende Element (5) mittels einer Befestigung (16;16,14,15;16,19) am Substrat (2) angebracht ist.

26. Vorrichtung nach einem der Ansprüche 19 bis 25, dadurch gekennzeichnet, dass das Substrat (2) ein Silizium-Wafer ist, die Trennschicht (7) aus SiO$_2$ besteht und vorzugsweise der Wellenleiter (1) aus Si$_3$N$_4$ und das phasenschiebende Element (5) und die Schutzschicht (10) aus SiO$_2$ bestehen.

27. Anwendung des Verfahrens nach einem der Ansprüche 1 bis 18, zur Phasen-Modulation und/oder Intensitäts-Modulation, und/oder zum Ein- und Aus-Schalten oder Schalten geführter optischer Wellen zwischen verschiedenen Ausgängen, und/oder zur Ablenkung, und/oder Fokussierung von optischen Wellen, und-/oder zur Aenderung der Resonanz-Frequenzen von Frequenzfiltern oder zur Aenderung der Emissionsfrequenzen von integriert-optischen Lasern.

28. Anwendung des Verfahrens nach einem der Ansprüche 1 bis 16, zur Messung von sehr kleinen mechanischen Verschiebungen, und/oder von mechanischen Kräften, oder pneumatischen oder hydrostatischen Drücken, einschliesslich des Druckes von Schall- und Ultraschall-Wellen, und/oder von Beschleunigungen, und/oder von elektrischen Spannungen oder Strömen, und/oder von Temperatur-Aenderungen.

29. Anwendung des Verfahrens nach einem der Ansprüche 1 bis 18, in optischen Kommunikations-Systemen und in faser-optischen Sensor-Systemen.

30. Anwendung des Verfahrens nach einem der Ansprüche 1 bis 16, als Mikrophon oder Hydrophon.

31. Anwendung des Verfahrens nach Anspruch 15, in der digitalen optischen Datenspeicherung mit einem integriert-optischen Lese- oder Schreibkopf.

## Claims

1. Optical micromechanical method for changing the phase of guided waves charaterized in that

a) in a waveguide (1), or in an integrated optic or fibre optic circuit which is known as such and which comprises at least one waveguide (1), the effective refractive index N and hence the phase of the optical wave (3) guided in a section (1') of the waveguide (1) are changed by varying the distance d between the waveguide section (1') and a phase-shifting element (5) located opposite to said waveguide section (1'), whereby the distance d is chosen so small, that the guided wave (3) in waveguide section (1') interacts by means of its evanescent field- which decreases exponentially with increasing distance from waveguide (1') - through the gap (4), filled with a medium having small absorption and a refractive index n<N, with the phase shifting element (5), or at least with its surface layers (13) on the surface facing the waveguide sec-tion (1'), and

16

b) no or only very little power of the guided wave (3) is absorbed by or coupled out from phase-shifting element (5).

2. Method according to claim 1, characterized in that the distance between the waveguide section (1') and the phase-shifting element (5) is smaller than four times the penetration depth $\Delta z=(\lambda/2\pi)(N^2-n^2)^{-1/2}$ of the evanescent field into the gap (4), where $\lambda$ is the wavelength in vacuum, and preferably smaller than one penetration depth $\Delta z$.

3. Method according to claims 1 or 2, characterized in that the gap (4) between the section (1') of the waveguide (1) and the phase-shifting element (5) is filled with air or another gas, and/or consists of a medium which is compressible and/or can be laterally pressed out of the gap (4), or is evacuated.

4. Method according to one of the claims 1 to 3, characterized in that the change of distance d between the phase-shifting element (5) and the section (1') of the waveguide (1) is produced by a force (6) or several forces, preferably by mechanical forces, and/or pneumatic or hydrostatic pressures, or by pressures of sound or ultrasonic waves, and/or acceleration forces, and/or by electrostatically, electromagnetically, or piezoelectrically generated forces, or by forces exerted by acoustic surface waves.

5. Method according to one of the claims 1 to 3, characterized in that the change in distance d between the phase-shifting element (5) and the section (1') of the waveguide (1) is produced through thermal expansion or deformation of one, some, or all components chosen from the group consisting of waveguide (1), substrate (2), phase-shifting element (5) and its attachment (16;16,14,15;16,19) to the waveguide (1) or substrate (2), by temperature changes, which in particular are caused either by electric currents in an electrically conducting heating layer, consisting for example, of indium-tin-oxide (ITO), or in a thermo-electric element, which are attached to the substrat (2), the phase-shifting element (5), or the attachment (16;16,14,15;16,19), or by absorption of light or infrared radiation in waveguide section (1') or in the phase-shifting element (5), wherein either the light or infrared radiation is incident from outside or the guided optical wave (3) itself is partially absorbed.

6. Method according to one of the claims 1 to 5, characterized in that the waveguide (1) has the form of a planar or strip waveguide on a substrate (2).

7. Method according to one of the claims 1 to 5, characterized in that the waveguide (1) has the form of the core (21) of a fibre waveguide, the fibre cladding (22) of which is in the waveguide section (1') completely or partially removed, preferably one one side of the fibre only.

8. Method according to one of the claims 1 to 7, characterized in that an optical wave (3e) is coupled into a waveguide (1) and is guided therein, and is incident on an integrated optic or fibre optic interferometer, preferably a Mach-Zehnder interferometer or Michelson interferometer, and that the distance d between a section (1a') of the waveguide (1a) in one leg of the interferometer and the phase-shifting element (5) located opposite to said section (1a') is varied, whereby the phase of the guided wave (3a) in waveguide section (1a') and hence the intensities of the guided waves $(3c;\overline{3a},\overline{3b})$ at the output ports of the interferometer are changed, and that either the distance d is varied as a function of time and thus a desired intensity modulation is impressed on the waves $(3c;\overline{3a},\overline{3b})$, or that by the effect of forces (6) or temperature changes induced unknown changes of the distance d are determined from the intensity changes of one of the waves $(3c;\overline{3a},\overline{3b})$.

9. Method according to one of the claims 1 to 7, characterized in that an optical wave (3e) is coupled into and is guided in one of two strip waveguides (1a,1b) which form a directional coupler, and that the distance d between the section (1a') of the waveguide (1a) in the coupling region and the phase-shifting element (5) located opposite to it is varied, and hence the intensities of the guided waves $(\overline{3a},\overline{3b})$ in the two waveguides (1a,1b) at the output ports are changed, or the guided wave (3e) is switched from the one to the other output waveguide (1a,1b) of the directional coupler.

10. Method according to one of the claims 1 to 7, characterized in that the distance d is varied between a section (1') of an optical waveguide (1) inside of an integrated optic or fibre optic resonator, preferably a Fabry-Perot resonator or ring resonator, and a phase-shifting element (5) which is located opposite said section (1'), and thereby the resonance frequencies of the resonator and its transmittance and reflectance are changed, and that either a guided optical wave (3e) is incident on the resonator and the intensities of the reflected (3r) and transmitted waves (3t) are changed, or that the wavelengths are changed of the guided waves generated by amplification in an active medium inside the resonator.

11. Method according to one of the claims 1 to 7, characterized in that a wave (3) guided in an optical waveguide (1) impinges on a grating (8) which acts as a Bragg reflector, and that the distance d between the waveguide (1) and a phase-shifting element (5) located opposite to said waveguide in the region of the grating (8) is varied, whereby the wavelength for which optimum Bragg reflection occurs and the reflectance and transmittance of the Bragg reflector are changed and hence the intensities of the transmitted (3t) and reflected (3r) guided waves dependent on their frequencies are changed, or that guided waves (3) are generated in the region of the grating (8) in a waveguide 1 with amplification, i.e., in a so called DFB (distributed feedback) laser, whereby their wavelengths, i.e. the emission frequencies of the DFB lasers are changed.

12. Method according to one of the claims 1 to 7, characterized in that an optical wave (3e) is by a grating coupler (8) coupled into a waveguide (1) and that the distance d between the waveguide section (1′) and a phase-shifting element (5) which is located opposite to said section (1′) in the region of the grating coupler (8) is varied, whereby the intensity of the incoupled guided wave (3) and hence the intensity of the non-incoupled part of the incident optical wave (3e) are changed.

13. Method according to one of the claims 1 to 7, characterized in that an optical wave (3) guided in a waveguide (1) is outcoupled by a grating coupler (8) and that the distance d between the waveguide section (1′) and a phase-shifting element (5), which is located opposite to said section (1′) in the region of the grating coupler (8), is varied uniformly and/or like a wedge in direction of propagation of the guided wave (3), whereby the direction and/or focusing of the outcoupled beam (3a) are changed.

14. Method according to one of the claims 1 to 7, characterized in that an optical wave (3) is guided in a planar waveguide (1) and that the distance d between a section (1′) of the waveguide (1) and a phase-shifting element (5), which is located opposite to said section (1′), is formed like a wedge transverse to the direction of propagation of the guided wave (3) and that the wedge angle is varied, whereby the guided wave (3) is deflected and the deflection angle ($\beta$) of the deflected wave (3d) after the phase-shifting element (5) is changed, and/or has the form of a quadratic curve, the curvature of which is varied, whereby the guided wave (3d) after the phase-shifting element (5) is focused or defocused and the focusing is changed.

15. Method according to claims 13 and/or 14, characterized in that light of a laser (9) is coupled into a planar waveguide (1) on a substrate (2), and is incident divergently on a grating coupler (8) with curved grating lines and non-constant grating period and is outcoupled by it, whereby the outcoupled wave (3a) is focused to a focus (11), and that with a phase-shifting element (5) opposite the section (1′) of the planar waveguide (1), and/or with a phase-shifting element (5) opposite the grating coupler (8) the focus (11) is displaced in one direction or two orthogonal directions, respectively.

16. Method according to claims 1 to 7, characterized in that a guided wave (3e) is coupled into one of two strip waveguides (1a,1b), which intersect under a small angle and thus form an X-switch, and that the distance d between the waveguide sections (1a′,1b′) in their cross-over region and a phase-shifting element (5) located oppositely is changed, preferably in such a way that a in direction perpendicular to the two strip waveguides a wedge like gap (4) is formed between the phase-shifting element (5) and the waveguide sections (1a′,1b′) and the substrate surface, respectively, and the wedge angle is changed, whereby the wave (3e) at the output of the X-switch is switched from one strip waveguide (1a) to the other strip waveguide (1b), or the intensities of the guided waves ($\overline{3a}$) aund ($\overline{3b}$) at the output ports are modulated, respectively .

17. Method according to claims 1 to 9 or 16, characterized in that in an integrated optic or fibre optic Mach-Zehnder interferometer, directional coupler, or X-switch, which as 2 x 2 switch matrices optically interconnect two input waveguides (1a) and (1b) with two output waveguides (1a) and (1b), the distance d between the phase-shifting element (5) and the waveguide sections (1a′;1a′,1b′) is adjusted in such a way, that either the input waveguide (1a) is optically interconnected only with the output waveguide (1a) and simultaneously the input waveguide (1b) only with the output waveguide (1b), or the input waveguide (1a) is optically interconnected only with the output waveguide (1b) and simultaneously the input waveguide (1b) only with the output waveguide (1a), and that by a change of the distance d the switch matrix can be switched from the first mentioned parallel state into the last mentioned cross state.

18. Method according to claim 17, characterized in that in M x M′ switch matrices which are formed by arrays of directional couplers, Mach-Zehnder interferometers, or X-switches, which serve as 2 x 2 switch matrices and which each contain at least one phase-shifting element (5), the distances d of the phase-shifting elements (5) from the corresponding waveguide sections (1a′;1a′,1b′) in the 2 x 2 switch matrices are adjusted in such a way, that each of M input waveguides is optically interconnected as desired with one or several of M′ output waveguides, where M and M′ are integers >2.

19. Apparatus for performing the method according to one of the claims 1 to 18, charaterized in that, it comprises an optical waveguide (1) or an integrated optic or fibre optic circuit, which contains at least one optical waveguide, and a phase-shifting element (5) located at a small variable distance d opposite section (1′) of the waveguide (1) and separated by a gap (4) from it, whereby the latter consists in its entirety or to the extent of its surface layers (13) on the surface facing the waveguide section (1′) from materials having no or small absorption at the used wavelength $\lambda$ and with refractive indices $n_E$ smaller than the effective refractive index N of the optical wave (3) guided in the waveguide section (1′).

20. Apparatus according to claim 19, characterized in that the surface of the phase-shifting element (5) or its surface layers (13) facing the waveguide section (1′) are either smooth or provided with a surface structure, e.g. a grating (8) acting as an input or output coupler, or as a Bragg reflector.

21. Apparatus according to one of the claims 19 to 20, characterized in that the phase-shifting element (5) opposite the waveguide section (1′) is attached to a tongue or paddle (14), bridge (19), or membrane, which in turn with an attachment (16) is attached to the waveguide (1), the substrate (2), or the protection layer (10), wherein the tongue or paddle (14), bridge (19), or membrane preferably are miniaturized and for example consist of $SiO_2$, and are preferably covered with another layer (15), which for example has a different thermal expansion coefficient, or is a heating layer, a piezoelectric layer, or a metal layer.

22. Apparatus according to one of the claims 19 to 21, characterized in that beneath the waveguide section (1'), in the substrate (2), or in the buffer layer (7) lying between waveguide (1) and substrate (2), a cavity is located as the gap (4) between the waveguide section (1') and the phase-shifting element (5), wherein preferably the phase-shifting element (5) is identical with that region of substrate (2) or buffer layer (7) adjacent to the gap (4), or that above the waveguide section (1') in the protection layer (10) on the waveguide (1) a cavity is provided as the gap (4) between the waveguide section (1') and the phase-shifting element (5), wherein preferably the phase-shifting element (5) is identical with that region of the protection layer (10) adjacent to the gap (4), or that in the case of a fibre waveguide in section (1') in the cladding (22) a cavity is provided as the gap (4) between fibre core (21) and the phase-shifting element (5), wherein preferably the phase-shifting element (5) is identical with the region of the cladding (22) adjacent to the gap (4).

23. Apparatus according to claim 19, characterized in that a cavity is provided as the gap (4) inside the waveguide section (1') and the regions of the waveguide section (1') adjacent to the gap (4) act simultaneously as waveguide (1') and as phase-shifting element (5).

24. Apparatus according to one of the claims 19,22 or 23, characterized in that cavities, for example in the form of slits, bores, or holes are provided as gap (4) in the waveguide section (1'), the protection layer (10), the buffer layer (7), or the substrate (2), in fibre waveguides in the core (21) or in the cladding (22).

25. Apparatus according to one of the claims 19 to 21, characterized in that the phase-shifting element (5) is attached to the substrate (2) with a holder (16;16,14,15;16,19).

26. Apparatus according to one of the claims 19 to 25, characterized in that the substrate (2) is a silicon wafer, the buffer layer (7) consists of $SiO_2$, and preferably the waveguide (1) consists of $Si_3N_4$ and the phase-shifting element (5) and the protection layer (10) of $SiO_2$ .

27. Application of the method according to one of the claims 1 to 18, for the purpose of modulating phase or intensity, and/or for switching guided optical waves on or off, or switching said waves between various output ports, and/or for deflecting and/or for focusing of optical waves, and/or for changing the resonance frequencies of frequency filters or for changing the emission frequencies of integrated optical lasers.

28. Application of the method according to one of the claims 1 to 16, for the purpose of measuring very small mechanical displacements, and/or of mechanical forces, or pneumatic or hydrostatic pressures, including the pressure of sound and ultrasonic waves, and/or of accelerations, and/or of electric voltages or currents, and/or of temperature changes.

29. Application of the method according to one of the claims 1 to 18 in optical communication systems and in fibre optic sensor systems.

30. Application of the method according to one of the claims 1 to 16 as a microphone or hydrophone.

31. Application of the method according to claim 15 in digital optical data storage with an integrated optic pickup for reading and/or writing.

## Revendications

1. Procédé micromécanique optique de modification de phase d'ondes guidées, **caractérisé en ce que**
a) l'indice de réfraction effectif N et donc la phase de l'onde optique (3) guidée dans une section (1') du conducteur d'ondes (1) sont modifiés dans un conducteur d'ondes (1), ou dans un circuit optique intégré ou optique à fibres en soi connu, qui contient au moins un conducteur d'ondes (1), par le fait que la distance d entre la section (1') du conducteur d'ondes et un élément (5) modifiant la phase installé en face de celle-ci est modifiée, la distance d étant choisie assez petite pour que l'onde (3) guidée dans la section (1') du conducteur d'ondes fait déborder hors de cette section le champ amorti transversalement et diminuant de façon exponentielle avec l'augmentation de sa distance ou conducteur d'ondes (1'), à travers l'espace intermédiaire (4) rempli d'un milieu à faible absorption à indice de réfraction n<N, en fonctionnement alterné avec l'élément (5) modifiant la phase, ou au moins avec des couches (13) de celui-ci proches de la surface tournée vers la section (1') du conducteur d'ondes, et
b) aucune fraction ou seule une faible fraction de la puissance de l'onde guidée (3) n'est rayonnée dons l'élément (5) modifiant la phase ou n'est absorbée par celui-ci.

2. Procédé selon la revendication 1, **caractérisé en ce que** la distance d entre la section (1') du conducteur d'ondes et l'élément (5) modifiant la phase est plus petite que quatre profondeurs de pénétration $\Delta z = (\lambda/2\pi)(N^2-n^2)^{-1/2}$ du champ amorti transversalement dans l'espace intermédiaire (4), la longueur d'onde de l'onde lumineuse dans le vide, désignée par λ, étant de préférence plus petite qu'une profondeur de pénétration Δz.

3. Procédé selon les revendications 1 et 2, **caractérisé en ce que** l'espace intermédiaire (4) entre la section (1′) du conducteur d'ondes (1) et l'élément (5) modifiant la phase est rempli d'air ou d'un autre gaz, et/ou consiste en un milieu compressible et/ou en un milieu pouvant être extrait latéralement sous pression hors de l'espace intermédiaire (5), ou est mis sous vide.

4. Procédé selon l'une des revendications 1 à 3, **caractérisé en ce que** la modification de la distance d entre l'élément (5) modifiant la phase et la section (1′) du conducteur d'ondes (1) est effectuée par une force (6) ou plusieurs forces, de préférence par des forces mécaniques, et/ou des pressions pneumatiques ou hydrostatiques, ou par les forces exercées par les ondes sonores ou ultrasoniques, et/ou par des forces d'accélération, et/ou par des forces d'origine électrostatique, électromagnétique ou piézo électrique, ou par des forces provenant d'ondes superficielles acoustiques.

5. Procédé selon l'une des revendications 1 à 3, **caractérisé en ce que** la modification de la distance d entre l'élément (5) modifiant la phase et la section (1′) du conducteur d'ondes (1) est provoquée par des modifications de température par l'intermédiaire de la dilatation ou de la flexion ou de la déformation thermiques de certaines ou de toutes les pièces du groupe comprenant le conducteur d'ondes (1), le substrat (2), l'élément (5) modifiant la phase et ses fixations (16; 16, 14, 15; 16,19) au conducteur d'ondes (1) ou au substrat (2), modifications de température qui en particulier sont créées soit par des courants électriques passant dans une couche chauffante conductrice de l'électricité, consistant par exemple en Indium-Zinc-Oxyde (ITO), ou dans un élément thermo-électrique, qui sont installés sur le substrat (2), sur l'élément (5) modifiant la phase ou sur les fixations (16; 16,14,15; 16,19) de celui-ci, soit par absorption de lumière ou de rayonnement infra-rouge dans la section (1′) du conducteur d'ondes, ou dans l'élément (5) modifiant la phase, soit que la lumière ou le rayonnement infra-rouge pénètre de l'extérieur, soit que l'onde (3) optique guidée soit elle-même partiellement absorbée.

6. Procédé selon l'une des revendications 1 à 5, **caractérisé en ce que** le conducteur d'ondes (1) est réalisé sur un susbtrat (2) sous forme d'une bande conductrice d'ondes ou d'un conducteur d'onde plan.

7. Procédé selon l'une des revendications 1 à 5, **caractérisé en ce que** le conducteur d'ondes (1) est réalisé sous la forme d'un noyau (21) de fibre d'une fibre conductrice d'ondes, dans laquelle dans la section (1′) du conducteur d'ondes, le manteau (22) de la fibre est de préférence enlevé partiellement ou totalement sur un côté de la fibre.

8. Procédé selon l'une des revendications 1 à 7, **caractérisé en ce qu**'une onde optique (3e) est accouplée à l'entrée d'un conducteur d'ondes (1) et conduite dans celui-ci et vient pénétrer dans un interféromètre optique intégré ou optique à fibres, de préférence un interféromètre Mach-Zehnder ou un interféromètre Michelson, et en ce que l'on modifie la distance d entre une section (1a′) du conducteur d'ondes (1a) d'un bras de l'interféromètre et l'élément (5) modifiant la phase installé face à celui-ci, ce qui modifie la phase de l'onde (3a) guidée dans la section (1a′) du conducteur d'ondes et donc l'intensité des ondes guidées (3c;3a,3b) à la sortie de l'interféromètre, et en ce que soit on modifie la distance en fonction du temps et donc on imprime aux ondes (3c;3a,3b) une modulation d'intensité voulue, soit on détermine à partir des modifications d'intensité d'une des ondes (3c;3a,3b) les modifications, inconnues, de la distance d résultant de l'action de forces (6) ou de modifications de températures.

9. Procédé selon l'une des revendications 1 à 7, **caractérisé en ce qu**'une onde optique (3e) est couplée à l'entrée d'une de deux bondes conductrices d'ondes (1a, 1b) formant un coupleur orienté et est guidée dans celle-ci, en ce qu'on fait varier un élément (5) modifiant la phase apporté, et qu'ainsi on modifie les intensités des ondes guidées (3a, 3b) dans les deux conducteurs d'ondes (1a, 1b) à la sortie ou que l'on commute l'onde guidée (3e) de l'un à l'autre des conducteurs d'ondes (1a, 1b) à la sortie du coupleur orienté.

10. Procédé selon l'une des revendications 1 à 7, **caractérisé en ce que** l'on fait varier la distance d entre une section (1′) d'un conducteur optique (1) à l'intérieur d'un résonateur optique intégré ou optique à fibres, de préférence un résonateur Fabry-Perot ou un résonateur à anneau, et un élément (5) modifiant la phase déposé en face de celle-ci, et que l'on modifie ainsi les fréquences de résonance du résonateur et ses capacités de réflection et de transmission, et en ce que soit une onde optique (3e) guidée pénètre dans le résonateur et que les intensités des ondes réfléchie (3r) et transmise (3t), sont modifiées, soit que des ondes guidées sont créées dans un milieu actif à l'intérieur du résonateur par amplification, ondes dont les longueurs d'onde sont modifiées.

11. Procédé selon l'une des revendications 1 à 7, **caractérisé en ce que** l'on fait pénétrer une onde (3) guidée dons un conducteur optique (1) sur une grille (8) servant de réflecteur de Bragg, et que l'on fait varier la distance d entre le conducteur d'ondes (1) et un élément (5) modifiant la phase apporté en face de celui-ci au voisinage de la grille (8), grâce à quoi on modifie les longueurs d'onde pour lesquelles a lieu une réflection Bragg optimale, ainsi que la capacité de réflection et de transmission du réflecteur Bragg, et qu'on modifie ainsi, indépendamment de leur fréquence, les intensités des ondes guidées transmise (3t) et réfléchie (3r), ou que l'on crée par amplification dans un conducteur d'ondes (1) des ondes guidées (3) au voisinage de la grille (8), c'est-à-dire dans ce que l'on appelle un DFB (Distributed Feed Back Laser), ce qui modifie leur longueur d'onde, c'est-à-dire les fréquences d'émission du laser DFB.

12. Procédé selon l'une des revendications 1 à 7, **caractérisé en ce que** l'on couple à l'entrée d'un conducteur d'ondes (1) une onde optique (3e) avec un coupleur à grille (8), et que l'on modifie la distance d entre la section (1') du conducteur d'ondes et un élément (5) modifiant la phase apporté en face de celle-ci au voisinage du coupleur à grille (8), ce qui modifie l'intensité de l'onde guidée (3) couplée à l'entrée et donc aussi l'intensité de la fraction non couplée à l'entrée de l'onde optique (3e) incidente.

13. Procédé selon l'une des revendications 1 à 7, **caractérisé en ce que** l'on couple à la sortie une onde optique guidée (3) dans un conducteur optique 1, hors d'un coupleur à grille (8) et que l'on modifie de manière régulière et/ou en forme de biseau dans la direction de propagation de l'onde guidée (3) la distance d entre la section 1' de conducteur d'ondes et un élément (5) modifiant la phase apporté en face de celle-ci au voisinage du coupleur à grille (8), ce qui modifie la direction et/ou la convergence du rayonnement (3a) couplé à la sortie.

14. Procédé selon l'une des revendications 1 à 7, **caractérisé en ce qu'**une onde optique (3) est guidée dans un conducteur d'ondes optiques (1) plan et que la distance d entre une section (1') du conducteur d'ondes (1) et un élément (5) modifiant la phase apporté en face de celle-ci et réalisé en forme de biseau transversal à la direction de propagation de l'onde guidée (3), et que l'on modifie l'angle du biseau, ce qui diffracte l'onde guidée (3) et modifie l'angle de diffraction (β) de l'onde diffractée (3d), en arrière de l'élément (5) modifiant la phase, et/ou que cette distance est courbée et que l'on modifie cette courbure, ce qui fait converger ou diverger l'onde guidée (3d) en arrière de l'élément (5) modifiant la phase et modifie l'angle de convergence ou de divergence.

15. Procédé selon les revendications 13 et/ou 14, **caractérisé en ce que** la lumière d'un laser (9) est couplée à l'entrée dans un conducteur d'ondes (1) plan placé sur un substrat (2) et tombe de manière divergente sur un coupleur à grille (8) à traits de grille cintrés et période non constante de grille et est découplée hors de celle-ci, tandis que l'onde (3a) couplée à la sortie est concentrée vers un foyer (11), et en ce que le foyer (11) est déplacé dans deux directions mutuellement perpendiculaires au moyen d'un élément (5) modifiant la phase placé en face de la partie (1') du conducteur d'ondes (1) plan, et/ou au moyen d'un élément (5) modifiant la phase placé en face du coupleur à grille (8).

16. Procédé selon l'une des revendications 1 à 7, **caractérisé en ce qu'**une onde guidée (3e) est couplée à l'entrée dans une des deux bandes conductrices d'ondes (1a, 1b) se croisant sous un petit angle et formant un commutateur en X, et en ce que l'on modifie la distance d entre les sections (1a', 1b') du conducteur d'ondes au voisinage de leur croisement et un élément (5) modifiant la phase apporté en face de l'une de ces sections, et ce de préférence de manière à ce que dans la direction perpendiculaire aux deux bandes conductrices d'ondes soit formé un espace intermédiaire (4) en forme de biseau, entre l'élément (5) modifiant la phase et les sections (1a', 1b') de conducteur d'ondes ou la surface du substrat, et en ce que l'on fait varier l'angle de biseau, ce qui à la sortie du commutateur en X commute l'onde (3e) d'une bande conductrice d'ondes (1a) sur l'autre bande conductrice d'ondes (1b), ou, à la sortie, module les intensités des ondes guidées (3a et 3b).

17. Procédé selon l'une des revendications 1 à 9 ou 16 **caractérisé en ce que** dans un interféromètre Mach-Zehnder optique intégré ou optique à fibres, un coupleur orienté ou un commutateur en X qui en tant que matrice de commutation 2x2 relie optiquement deux conducteurs d'ondes à l'entrée (1a)(1d) à deux conducteurs d'ondes à la sortie (1a)(1d), on règle la distance d entre l'élément (5) modifiant la phase et les sections de conducteur (1a', 1a', 1b') de telle manière que soit le conducteur d'ondes (1a) à l'entrée soit optiquement relié uniquement au conducteur d'ondes (1a) à la sortie, et que simultanément le conducteur d'ondes à l'entrée (1b) soit optiquement relié uniquement au conducteur d'ondes (1d) à la sortie, soit le conducteur d'ondes (1a) à l'entrée soit relié optiquement uniquement ou conducteur d'ondes (1b) à la sortie, et que simultanément le conducteur d'ondes (1b) à l'entrée soit relié optiquement uniquement au conducteur d'ondes (1a) à la sortie, et en ce que, par une modification de la distance d, la matrice de commutation puisse être commutée de l'état parallèle premier cité en l'état en croix dernier cité.

18. Procédé selon la revendication 17, **caractérisé en ce que**, dans des matrices de commutation NxM consistant en agencements de coupleurs orientés, d'interféromètre Mach-Zehnder ou de commutareurs en X, qui servent de matrices de commutation 2x2 et qui contiennent au moins un élément (5) modifiant la phase, la distance d entre les éléments (5) modifiant la phase et chacune des sections de conducteur d'ondes (1a'; 1a', 1b') des matrices de commutation 2x2 soit réglée de telle manière que chacun des N conducteurs d'ondes à l'entrée soit relié optiquement à un ou plusieurs conducteurs d'ondes à la sortie voulu(s) des M conducteurs d'ondes à la sortie, N et M étant des nombres entiers supérieurs à 2.

19. Dispositif en vue de l'exécution du procédé selon l'une des revendications 1 à 18, **caractérisé en ce qu'**il comprend un conducteur d'ondes optiques (1) ou un circuit optique intégré ou optique à fibres, qui contient ou moins un conducteur d'ondes optiques et un élément (5) modifiant la phase apporté en face de la section (1′) du conducteur d'ondes (1), et séparé de celle-ci par un espace intermédiaire (4) d'une petite distance d modifiable, cet élément (5) modifiant la phase en son entier ou en ses couches (13) proches de la surface tournée vers la section (1′) du conducteur d'ondes étant constitué de matériaux n'absorbant pas ou absorbant peu les longueurs d'onde λ de l'onde lumineuse utilisée, avec des indices de réfraction $n_E$ inférieurs à l'indice de réfraction N effectif de l'onde (3) guidée dans la section (1′) du conducteur d'ondes.

20. Dispositif selon la revendication 19, **caractérisé en ce que** la surface de l'élément (5) modifiant la phase tournée vers la section (1′) du conducteur d'ondes, ou les couches ( 13) se trouvant sur cette surface, sont soit lisses soit munies d'une structure de surface, par exemple une grille (8) servant de coupleur d'entrée, coupleur de sortie ou de réflecteur de Bragg.

21. Dispositif selon l'une des revendications 19 ou 20 **caractérisé en ce que** l'élément (5) modifiant la phase est apporté en face de la section (1′) du conducteur d'ondes sur une languette (14), une traverse (19) ou une membrane, qui est fixée au moyen d'une fixation (16) sur le conducteur d'ondes (1) ou sur le substrat (2) ou sur la couche de protection (6), la languette (14), la traverse (19) ou la membrane étant de préférence miniaturisées et étant par exemple constituées de $SiO_2$, et étant de préférence recouvertes d'une autre couche (15), qui par exemple possède un autre coefficient de dilatation thermique, ou d'une couche chauffante, d'une couche piézo-électrique ou d'une couche métallique.

22. Dispositif selon l'une des revendications 19 à 21, **caractérisé en ce qu'**en dessous de la section (1′), dans le substrat (2) ou dans la couche de séparation située entre le conducteur d'ondes (1) et le substrat (2), une découpe est réalisée et sert d'espace intermédiaire (4) entre la section (1′) du conducteur d'ondes et l'élément (5) modifiant la phase, l'élément (5) modifiant la phase étant de préférence identique à la partie du substrat (2) ou de la couche de séparation (7) en contact avec l'espace intermédiaire (4), ou en ce qu'au-dessus de la section (1′) du conducteur d'ondes, dans la couche de protection (10) dont est muni le conducteur d'ondes (1), on réalise une découpe, servant d'espace intermédiaire (4) entre la section (1′) du conducteur d'ondes et l'élément (5) modifiant la phase, l'élément (5) modifiant la phase étant de préférence identique à la partie de la couche de protection (10) en contact avec l'espace intermédiaire (4), ou en ce que dans une fibre conductrice d'ondes, on réalise dans la section (1′) du manteau (22) une découpe servant d'espace intermédiaire (4) entre le noyau (21) de la fibre et l'élément (5) modifiant la phase, l'élément (5) modifiant la phase étant de préférence identique à la partie du manteau (22) en contact avec l'espace intermédiaire (4).

23. Dispositif selon la revendication 19, **caractérisé en ce que** l'on dispose à l'intérieur de la section (1′) du conducteur d'ondes, une découpe servant d'espace intermédiaire (4), les parties de la section (1′) du conducteur d'ondes en contact avec l'espace intermédiaire (4) servant en même temps de conducteur d'ondes (1′) et d'élément (5) modifiant la phase.

24. Dispositif selon l'une des revendications 19, 22 ou 23, **caractérisé en ce que** l'on réalise des découpes servant d'espace intermédiaire (4), par exemple sous la forme de fentes, de percements ou de trous dans la section (1′) du conducteur d'ondes, la couche de protection (10), la couche de séparation (7) ou le substrat (2), et dans des fibres conductrices d'ondes dans le noyau (21) ou dans le manteau (22).

25. Dispositif selon l'une des revendications 19 à 21, **caractérisé en ce que** l'élément (5) modifiant la phase est apporté sur le substrat (2) au moyen d'une fixation (16; 16,14,15; 16,19).

26. Dispositif selon l'une des revendications 19 à 25, **caractérisé en ce que** le substrat (2) est une plaquette de silicium, en ce que la couche de séparation (7) est en $SiO_2$ et que de préférence le conducteur d'ondes (1) étant $Si_3N_4$ et l'élément (5) modifiant la phase et la couche de protection (10) en $SiO_2$.

27. Recours ou procédé selon l'une des revendications 1 à 18 pour la modulation de phase et/ou la modulation d'intensité, et/ou pour la commutation à l'entrée et à la sortie au la commutation d'ondes optiques guidées entre différentes sorties, et/ou pour la diffraction et/ou pour la concentration d'ondes optiques, et/ou pour la modification des fréquences de résonance de filtres de fréquence ou pour la modification des fréquences d'émission de lasers optiques intégrés.

28. Recours au procédé selon l'une des revendications 1 à 16, pour la mesure de très petits déplacements mécaniques, et/ou de forces mécaniques, ou de pressions pneumatiques ou hydrostatiques, y compris de la pression d'ondes sonores et ultrasoniques, et/ou d'accélérations, et/ou de tensions ou de courants électriques, et/ou de modifications de température.

29. Recours au procédé selon l'une des revendications 1 à 18, dans des systèmes optiques de communication et dans des systèmes à fibres optiques de détection.

30. Recours ou procédé selon l'une des revendications 1 à 16 comme microphone ou hydrophone.

31. Recours au procédé selon la revendication 15 dans la mémorisation optique numérique de données, avec une tête optique intégrée de lecture ou d'écriture.

Fig. 1

Fig. 2

Fig. 3

Fig. 4

Fig. 5

Fig. 6

Fig. 7

Fig. 8

EP 0 394 219 B1

Fig. 9

Fig. 10

Fig. 11

Fig. 12

Fig.13

Fig. 14

Fig. 15

EP 0 394 219 B1

Fig. 17

Fig. 19

Fig. 16

Fig. 18